# EUROPÄISCHE PATENTSCHRIFT

(11) **EP 4 015 413 B1**
(45) Veröffentlichungstag und Bekanntmachung des Hinweises auf die Patenterteilung: **25.06.2025**
(21) Anmeldenummer: 21214395.2
(22) Anmeldetag: 14.12.2021
(51) Int. Cl.: B65D 90/14, B65D 88/14, B64D 9/00

(54) **FRACHTTRÄGER ZUR AUFNAHME IN DEN FRACHTBEREICH EINES FLUGZEUGS MIT VERFAHRBAREN ROLLELEMENTEN**
CARGO CARRIER FOR ACCOMMODATION IN THE CARGO AREA OF AN AIRCRAFT WITH MOVABLE ROLLING ELEMENTS
PORTE-FRET DESTINÉ À LA RÉCEPTION DANS LA ZONE DE FRET D'UN AVION POURVU D'ÉLÉMENTS ROULANTS MOBILES

(30) Priorität: 17.12.2020 DE 102020133943
(43) Veröffentlichungstag der Anmeldung: 22.06.2022
(73) Patentinhaber: Airbus Operations GmbH, 21129 Hamburg (DE)
(72) Erfinder: Grabow, Thomas, 21129 Hamburg (DE); Meiranke, Dirk, 21129 Hamburg (DE); Poppe, Andreas, 21129 Hamburg (DE); Benthien, Hermann, 21129 Hamburg (DE); Schliwa, Ralf, 21129 Hamburg (DE)
(74) Vertreter: Bird & Bird LLP - Hamburg

(56) Entgegenhaltungen:
- WO-A1-2019/229844
- GB-A- 624 303
- JP-A- 2007 112 474
- JP-A- 2011 116 451
- US-A- 1 892 406
- US-A- 2 663 048
- US-A1- 2003 223 838

## Beschreibung

Die vorliegende Erfindung betrifft einen Frachtträger zur Aufnahme in den Frachtbereich eines Flugzeugs.

Aus dem Stand der Technik ist es bekannt, dass der Frachtbereich eines Flugzeugs in der Weise beladen wird, dass einzelne Frachtelemente von Frachtträgern oder sogenannten Frachtcontainer aus formstabilem Material wie Aluminium aufgenommen werden und diese Frachtcontainer dann in den Frachtbereich gefördert werden. Dazu ist einerseits eine erste Fördereinrichtung erforderlich, mittels derer die Frachtcontainer beispielsweise vom Rollfeld aus zu dem Eingang in den Frachtbereich gefördert werden. Anderseits ist bekannt, innerhalb des Frachtbereichs eine zweite Fördereinrichtung wie beispielsweise eine Förderbandanordnung oder ein Rollensystem vorzusehen, mit dem die Frachtcontainer innerhalb des Frachtbereichs auf dessen Bodenfläche von dem Eingang hin zu der endgültigen Position gefördert werden können.

Sowohl die Frachtcontainer selbst als auch die Fördereinrichtung innerhalb des Frachtbereichs können ein nicht unerhebliches Gewicht haben, wobei es aber wünschenswert ist, das Gewicht eines Flugzeugs so gering wie möglich zu halten, um dessen Treibstoffverbrauch zu minimieren.

Darüber hinaus ist es auch wünschenswert, dass die Frachtträger oder Frachtcontainer nicht nur in dem speziell dafür ausgestalteten Frachtbereich eines Flugzeugs aufgenommen werden können, sondern die Frachtträger sollten dann, wenn die Passagierkabine entweder gar nicht oder nur teilweise ausgenutzt wird, auch in dieser eingelagert werden können, wenn die Passagiersitze aus der Kabine entfernt worden sind. In einem solchen Fall ist es insbesondere wünschenswert, dass die Frachtcontainer oder Frachtträger in einfacher Weise von Beladepersonal innerhalb der Passagierkabine verschoben werden und damit an ihren endgültigen Platz gebracht werden können.

Aus der DE 10 2008 038 637 A1 ist es bekannt, einen Frachtcontainer im Bereich seines Bodens mit Rädern zu versehen, die zwischen einer eingefahrenen und einer ausgefahrenen Stellung mit Hilfe einer Betätigungseinrichtung hin und her bewegt werden können. Die EP 3 006 329 B1 und die EP 3 006 341 B1 beschreiben jeweils, dass auf der Bodenfläche des Frachtbereichs eines Flugzeugs Trägerelemente verschiebbar angebracht sind, die eine Gebläseeinheit aufweisen, mit der sie gegenüber der Bodenfläche angehoben werden können. Frachtcontainer, die auf Schienen angeordnet werden, die ebenfalls auf der Bodenflächenfläche vorgesehen sind, können von Trägerelementen, nachdem diese unter den Container geschoben worden sind, zunächst angehoben werden. Die Container können dann mittels der Trägerelemente verschoben werden. Zum Absetzen der Container wird die Gebläseeinheit der Trägerelemente dann wieder deaktiviert und die Trägerelemente können unter dem verschobenen Container herausgezogen werden, da dieser wieder auf den Schienen aufliegt.

Ebenfalls bekannt aus der JP 2011116 451 A und aus der JP 2007 112 474 A ist ein Frachtcontainer mit einem Bodenelement bekannt, das eine Vielzahl an Rollenelementen aufweist, wobei die Rollenelemente um eine Drehachse drehbar gelagert und über einen Mechanismus ein- und ausschwenkbar sind.

Weiterhin ist es in diesem Zusammenhang aus der EP 2 492 217 A1 bekannt, als Frachtcontainer einen Behälter aus textilem Material zu verwenden, der flächenförmige Verstärkungselemente aufweist. Nachteilhaft an einem derartigen Container ist, dass er nur schwierig selbst über eine ebene Bodenfläche eines Frachtbereichs bewegt werden kann, sodass dort nach wie vor Fördereinrichtungen erforderlich sind, die selbst mit einem erheblichen Gewicht verbunden sind.

Weiterhin müssen Frachtträger mit Frachtgut von Fahrzeugen oder Anhängern aus, die über das Rollfeld bewegt werden können, in den Frachtbereich eines Flugzeugs gefördert werden, wobei hierzu in der Regel Förderbänder eingesetzt werden, die geneigt zwischen einer Beladeposition nahe dem Rollfeld und der Ladeluke verlaufen. Dabei besteht das Problem, dass der Frachtträger geneigt gegenüber der Ebene des Bodens des Frachtbereichs durch die Ladeluke bewegt werden muss, wobei der Querschnitt des beladenen Frachtträgers dann, wenn er geneigt an die Ladeluke verbracht wird, zu groß ist, um die Ladeluke passieren zu können.

Eine weiteres, sich aufgrund der Neigung des Förderbandes zwischen Rollfeld und Ladeluke des Frachtbereichs ergebendes Problem liegt darin, dass die Grundfläche des Frachtträgers, auf der das Frachtgut aufliegt, während des Transports durch das Förderband geneigt ist, was dazu führen kann, dass das Frachtgut auf der Grundfläche verrutscht.

Daher ist es, ausgehend vom Stand der Technik, die Aufgabe der vorliegenden Erfindung, die zuvor genannten Probleme zu beseitigen und insbesondere die zur Beladung des Frachtbereichs eines Flugzeugs verwendeten während des Flugs im Flugzeug verbleibenden Teile möglichst leicht auszugestalten und dennoch eine komfortable Beladung zu ermöglichen. Ferner soll ein Frachtträger bereitgestellt werden, der flexibel einsetzbar ist und nicht von einem Fördersystem in einem Frachtbereich abhängig ist, sondern auch ohne solche Fördersystem leicht rangierbar ist.

Erfindungsgemäß wird diese Aufgabe gemäß einem ersten Aspekt gelöst durch einen Frachtträger gemäß den Merkmalen des Patentanspruchs 1. Der Frachtträger dient zur Aufnahme in den Frachtbereich eines Flugzeugs, mit einem Bodenelement, das eine Auflageseite aufweist, die derart an dem Frachtträger angeordnet ist, dass der Frachtträger so auf einer Bodenfläche eines Frachtbereichs eines Flugzeugs aufliegen kann, dass die Auflagefläche der Bodenfläche gegenüber liegt, wobei der Frachtträger derart ausgestaltet ist, so über die sich in einer Bodenebene erstreckende Bodenfläche bewegt zu werden, dass die Auflagefläche dabei zu der Bodenfläche weist, wobei das Bodenelement eine Grundfläche aufweist, die auf der Seite des Bodenelements angeordnet ist, die von der Auflageseite weg weist, wobei die Auflageseite mit einer Vielzahl von Rollelementen versehen ist, wobei jedes der Rollelemente an einem Halter um eine Drehachse drehbar gehaltert ist, wobei jeder der Halter zwischen einer ausgefahrenen Stellung und einer eingefahrenen Stellung verfahrbar ist, wobei der Abstand der Rollelemente von der Grundfläche in der ausgefahrenen Stellung größer ist als in der eingefahrenen Stellung, wobei die Drehachsen der Rollelemente, wenn die Halter in der ausgefahrenen Stellung sind, in einer gemeinsamen Drehachsenebene angeordnet sind und wobei die Rollelemente derart an dem Bodenelement gehaltert sind, dass die Drehachse jedes der Rollelemente um eine Hochachse drehbar ist, wobei die Hochachse parallel beabstandet zu einer Achse verläuft, die sich durch die Drehachse des Rollelements und senkrecht zu der Drehachsenebene erstreckt.

Demnach stellt die vorliegende Erfindung einen Frachtträger bereit, der in einem Frachtbereich eines Flugzeugs aufgenommen werden kann, wobei unter den Begriff "Frachtbereich" sowohl der eigentliche Frachtraum als auch ein Kabinenbereich des Flugzeugs fällt, der derart hergerichtet ist, beispielsweise durch Entfernen der Passagiersitze, dass dort ebenfalls Fracht aufgenommen werden kann.

Erfindungsgemäß weist ein erfindungsgemäßer Frachtträger für die Aufnahme in den Frachtbereich zunächst ein Bodenelement auf, das eine Auflageseite aufweist. Diese Auflageseite ist diejenige Seite des Bodenelements, die bei der normalen Benutzung des Frachtträgers der Bodenfläche des Frachtbereichs zugewandt ist. Somit ist diese derart angeordnet, dass sie bei der normalen Benutzung der Bodenfläche des Frachtbereichs gegenüber liegt. Darüber hinaus weist das Bodenelement des Frachtträgers noch eine Grundfläche auf, die an der der Auflageseite gegenüberliegenden Seite des Bodenelements vorgesehen ist und auf der Frachtelemente wie Gepäck aber auch jede Art von anderen Gegenständen angeordnet werden kann. Darüber hinaus kann an dem Bodenelement auch eine von der Grundfläche sich weg erstreckende Umfangswandung vorgesehen sein, die einen Aufnahmeraum des Frachtträgers für die Frachtelemente umgibt. Ein solcher Aufbau ist ebenfalls vom Gegenstand der vorliegenden Empfinden Erfindung umfasst.

Um zu ermöglichen, dass der Frachtträger über die Bodenfläche eines Frachtbereich bewegt werden kann, sind an der Auflageseite des Bodenelements eine Vielzahl von Rollelementen vorgesehen, wobei jedes der Rollelemente an einem Halter angebracht ist und relativ zu diesem um eine Drehachse drehbar ist, die vorzugsweise horizontal und damit parallel zu einer Ebene verläuft, in der sich auch das Bodenelement erstreckt. Jeder der Halter kann gegenüber dem Bodenelement zwischen einer ausgefahrenen Stellung und einer eingefahrenen Stellung verfahren werden, sodass sich der Abstand der Drehachse und damit des Rollenelements von der Grundfläche verändert. In der ausgefahrenen Stellung ist der Abstand größer als in der eingefahrenen Stellung, sodass das Rollelement in der ausgefahrenen Stellung auf einer Bodenfläche des Frachtbereichs aufliegt und das Bodenelement des Frachtträgers leicht über diese hinweg bewegt werden kann. Dabei sind dann, wenn alle Halter in der ausgefahrenen Stellung sind, die Drehachsen der Rollelemente in einer gemeinsamen Drehachsenebene angeordnet. Wenn die Halter jedoch in der eingefahrenen Stellung sind, befinden sich die Rollelemente in einer Position, in der sie vorzugsweise hinter in einer Auflageebene angeordneten Auflageelementen an dem Bodenelement zurückversetzt sind, sodass die Auflageelemente auf der Bodenfläche aufliegen und der Frachtträger nicht mehr ohne Weiteres verschoben werden kann.

Schließlich sind die Rollelemente derart an dem Halter und dem Bodenelement angebracht, dass für jedes Rollelement deren Drehachse um eine Hochachse drehbar ist, die zum einen senkrecht zu der Drehachse des Rollelements verläuft und die zum anderen parallel und beanstandet zu einer Achse ist, die sich senkrecht zu der Drehachsenebene und durch die Drehachse des Rollelements erstreckt. Demnach sind die Drehachsen, um die die Rollelemente jeweils drehbar sind, exzentrisch zu der Hochachse angeordnet. Um dies zu erreichen, ist es einerseits möglich, dass der Halter um die Hochachse drehbar an dem Bodenelement angebracht ist. Andererseits ist es auch möglich, dass die Rollelemente innerhalb der Halter um die Hochachse drehbar gegenüber diesen angebracht sind.

Dadurch wird erreicht, dass sich die Rollelemente, wenn der Frachtträger in eine vorgegebene Richtung geschoben wird, aufgrund dieser exzentrischen Anordnung so ausrichten, dass die Drehachse sich senkrecht zu der Richtung erstreckt, entlang derer der Frachtträger bewegt wird. Die exzentrische Anordnung der Hochachse relativ zu der Drehachse der Rollelemente führt also dazu, dass sich die Rollelemente selbsttätig ausrichten und ein Frachtträger, auch wenn er schwer beladen ist, in der Regel von einer Person über die Bodenfläche des Frachtbereichs eines Flugzeugs geschoben werden kann, wenn sich die Halter der Rollelemente alle in der ausgefahrenen Stellung befinden.

Mit dem erfindungsgemäßen Aufbau des Frachtträgers wird also erreicht, dass dieser ohne Schwierigkeiten über eine Bodenfläche eines Frachtbereichs manövriert werden kann, ohne dass dazu zusätzliche Einrichtungen im Frachtbereich erforderlich sind. Vielmehr kann dies durch eine einzige Person erfolgen. Durch die Verstellbarkeit der Halter der Rollelemente wird zudem erreicht, dass der Frachtträger, wenn er seine Endstellung erreicht hat, auf die Bodenfläche abgesenkt werden kann und an einer selbsttätigen Bewegung über die Bodenfläche gehindert ist.

In einer bevorzugten Ausführungsform sind die Rollelemente entlang ihrer Hochachsen zwischen der eingefahrenen und der ausgefahrenen Stellung verfahrbar, also tatsächlich entlang der Richtung, die senkrecht zu der Drehachsenebene verläuft. Es ist aber auch denkbar, dass die Verfahrrichtung geneigt zu der Drehachsenebene verläuft.

In einer weiteren bevorzugten Ausführungsform weist die Auflageseite Auflageelemente auf, die in einer Auflageebene angeordnet sind, wobei die Rollelemente in der ausgefahrenen Stellung der Halter über die Auflageebene vorstehen und in der eingefahrenen Stellung hinter diese zurückversetzt sind. Dabei können die Auflageelemente als Auflagepunkte dienen, in denen der Frachtträger auf der Bodenfläche aufliegt, wenn die Rollelemente in die eingefahrene Stellung verfahren sind. Insbesondere ist es denkbar, dass die Auflageelemente derart beanstandet sind, dass sie auf den Schienen in dem Boden der Passagierkabine eines Flugzeugs angeordnet werden können, in denen normalerweise die Passagiersitze gehaltert sind. Auf diese Weise kann erreicht werden, dass der erfindungsgemäße Frachtträger nicht nur in dem Frachtbereich, sondern auch in Bereichen der Passagierkabine angeordnet werden kann, in denen die Sitze zuvor entfernt worden sind, um die Passagierkabine ebenfalls als Frachtbereich zu nutzen.

Weiterhin ist es bevorzugt, wenn an dem Bodenelement sich senkrecht zur Auflageebene erstreckende Verriegelungszapfen vorgesehen sind, die an dem Bodenelement senkrecht zur Auflageebene verschiebbar gehaltert sind, sodass die Verriegelungszapfen zwischen einer Lösestellung und einer Verriegelungsstellung verschiebbar sind, wobei in deren Verriegelungsstellung ein freies Ende der Verriegelungszapfen über die Auflageebene vorsteht und in deren Lösestellung das freie Ende der Verriegelungszapfen in der Auflageebene oder auf der von der Drehachsenebene abgewandten Seite der Auflageebene angeordnet ist.

Mittels der Verriegelungszapfen ist es möglich, den Frachtträger in dafür in der Bodenfläche des Frachtbereichs vorgesehenen Aussparungen zu verriegeln, wenn er seine vorgesehene Position eingenommen hat. In weiter bevorzugter Weise ist die Position der Verriegelungszapfen an dem Bodenelement parallel zur Auflageebene einstellbar. Dadurch ist es möglich, den Frachtträger an unterschiedlich angeordnete Bohrungen oder Aussparungen in der Bodenfläche des Frachtbereichs anzupassen.

Die Vielzahl von Rollelementen umfasst mehrere Gruppen von Rollelementen, wobei die Halter, in denen die Rollelemente einer ersten der Gruppen gehaltert sind, entlang einer geradlinig verlaufenden ersten Linie an dem Bodenelement zwischen der eingefahrenen und der ausgefahrenen Stellung verschiebbar gehaltert sind, wobei die erste Linie parallel zu der Drehachsenebene verläuft. Bei einer derartigen Anordnung sind die Rollelemente entlang einer ersten Linie angeordnet und außerdem senkrecht zu dieser Linie gegenüber dem Bodenelement verfahrbar.

Ferner ist jeder der Halter, in denen die Rollelemente der ersten Gruppen gehaltert sind, eine geneigt unter einem Winkel von weniger als 90° zu der Hochachse, um die das in dem Halter gehalterte Rollelement drehbar ist, verlaufende Eingriffsfläche aufweist. Ferner ist eine sich entlang der ersten Linie erstreckende Betätigungsstange vorgesehen, die den geneigt verlaufenden Eingriffsflächen gegenüberliegende und an den Eingriffsflächen flächig anliegende Gegenflächen aufweist, wobei die Betätigungsstange entlang der ersten Linie verschiebbar in dem Bodenelement gehaltert ist, sodass die Betätigungsstange zwischen einer eingeschobenen und einer ausgezogenen Stellung verschiebbar ist. Ein Verschieben der Betätigungsstange von der eingeschobenen in die ausgezogene Stellung bewirkt ein Verfahren der Halter, in denen die Rollelemente der ersten Gruppe gehaltert sind, aus der eingefahrenen in die ausgefahrene Stellung.

Bei diesem Aufbau weisen die Halter, in denen die Rollelemente der ersten Gruppe aufgenommen und die entlang der ersten Linie angeordnet sind, geneigte Eingriffsflächen auf, an denen ebenfalls geneigte Gegenflächen an der Betätigungsstange, vorzugsweise vollflächig, anliegen. Letztere wiederum erstreckt sich parallel zu der ersten Linie. Wenn die Betätigungsstange entlang der ersten Linie verschoben wird, werden die Halter aus dem Bodenelement herausgeschoben oder es wird ihnen ermöglicht, sich in das Bodenelement hinein zu bewegen. Auf diese Weise kann die eingefahrene oder die ausgefahrene Stellung realisiert werden, wobei dazu ein vergleichsweise einfacher Aufbau vorgesehen ist. Aufgrund der bevorzugten vollflächigen Anlage von Gegenflächen und Eingriffsflächen kann zudem erreicht werden, dass dieser Aufbau eine hohe Stabilität aufweist.

Zur einfachen Bewegung der Betätigungsstange ist es weiter bevorzugt, wenn ein Betätigungsarm vorgesehen ist, der schwenkbar an dem Bodenelement gehaltert ist, wobei die Betätigungsstange an dem Betätigungsarm angelenkt ist und ein Verschwenken des Betätigungsarms gegenüber dem Bodenelement ein Verschieben der Betätigungsstange entlang der ersten Linie bewirkt.

In einer weiteren bevorzugten Ausführungsform kann ein erstes Ende der Betätigungsstange in der eingeschobenen Stellung über eine Kante des Bodenelements in einem ersten Umfang vorstehen, wobei das erste Ende der Betätigungsstange in das Innere des Bodenelements zurückgezogen ist oder das erste Ende in einem zweiten Umfang vorsteht, der geringer als der erste Umfang ist, wenn die Betätigungsstange in der ausgezogenen Stellung ist. Mithilfe des ersten Endes der Betätigungsstange kann der Frachtträger an Elementen des Frachtbereichs gegen eine vertikale Bewegung gesichert werden, wenn dieser in seiner Endposition ist, in der die Betätigungsstange in der eingezogenen Stellung und damit die Rollelemente in der eingefahrenen Stellung sind und eine Bewegung des Frachtträgers gerade nicht auftreten soll.

In weiter bevorzugter Weise weist das Bodenelement in einer dem ersten Ende der Betätigungsstange gegenüberliegenden Fläche eine Aufnahmeaussparung auf, die angepasst ist, das erste Ende einer Betätigungsstange aufzunehmen. Das in der eingeschobenen Stellung vorstehende erste Ende der Betätigungsstange eines ersten Frachtträgers kann dann in der Aufnahmeaussparung eines weiteren Frachtträgers aufgenommen werden, der unmittelbar benachbart zu dem ersten Frachtträger in dem Frachtbereich deponiert worden ist, um die beiden Frachtträger gegeneinander zu verriegeln. Auf diese Weise ist es möglich, eine Vielzahl von Frachtträgern fest miteinander zu koppeln, um eine Bewegung der Frachtträger insbesondere in vertikaler Richtung bei im Flugzeug auftretenden Stößen in vertikaler Richtung zu verhindern.

Erfindungsgemäß wird diese Aufgabe gemäß einem zweiten Aspekt gelöst durch einen Frachtträger gemäß den Merkmalen des Patentanspruchs 9.

Wenn die Vielzahl von Rollelementen mehrere Gruppen von Rollelementen umfasst und die Halter, in denen die Rollelemente einer ersten der Gruppen gehaltert sind, entlang einer geradlinig verlaufenden ersten Linie an dem Bodenelement zwischen der eingefahrenen und der ausgefahrenen Stellung verschiebbar gehaltert sind, ist eine sich entlang der ersten Linie erstreckende Nockenstange vorgesehen. Dabei kann die Nockenstange drehfest damit verbundene Nockenelemente aufweisen, wobei die Nockenstange um eine sich parallel zur Drehachsenebene und zur ersten Linie erstreckende Achse drehbar ist, wobei jedem der Halter, in denen die Rollelemente aus der ersten Gruppe gehaltert sind, ein Nockenelement zugeordnet ist, wobei jeder der Halter, in denen die Rollelemente aus der ersten Gruppe gehaltert sind, eine Anlagefläche aufweist, die zumindest einen Bodenabschnitt umfasst, wobei der Bodenabschnitt gesehen in einer Richtung senkrecht zu der Drehachsenebene zwischen der Nockenstange und der Drehachsenebene angeordnet ist und wobei das Nockenelement an dem Bodenabschnitt der Anlagefläche des dem Nockenelement zugeordneten Halters anliegt.

Durch Verdrehen der Nockenstange wird dann bewirkt, dass die daran vorgesehenen Nockenelemente die Halter, in denen die Rollelemente der ersten Gruppe aufgenommen sind, aufgrund der Anlage der Nockenelemente an dem Bodenabschnitt der Anlagefläche zwischen der eingefahrenen und der ausgefahrenen Stellung bewegt werden. Dies stellt eine weitere einfache Möglichkeit dar, das Verfahren der Halter zwischen der eingefahrenen und der ausgefahrenen Stellung zu bewirken. Dabei ist es auch möglich, dass die Anlageflächen die Nockenelemente vollständig umgeben, um einen größtmöglichen Kontakt zwischen den Nockenelementen und den Haltern zu gewährleisten.

Insbesondere weist jeder der Halter, in denen die Rollelemente aus der ersten Gruppe gehaltert sind, eine kreisförmige Bohrung auf, deren Innenfläche die Anlagefläche bildet und durch die sich die Nockenstange erstreckt, wobei die Nockenelemente einen kreisförmigen Querschnitt haben und über deren gesamten Umfang an der Anlagefläche anliegen. Gerade in diesem Fall ist ein solcher vollflächigen Kontakt gewährleistet, sodass die gesamte Anordnung aus Nockenstange, Nockenelemente und Haltern besonders stabil ist.

Erfindungsgemäß wird diese Aufgabe gemäß einem dritten Aspekt gelöst durch einen Frachtträger gemäß den Merkmalen des Patentanspruchs 10.

Wenn die Vielzahl von Rollelementen mehrere Gruppen von Rollelementen umfasst und die Halter, in denen die Rollelemente einer ersten der Gruppen gehaltert sind, entlang einer geradlinig verlaufenden ersten Linie an dem Bodenelement zwischen der eingefahrenen und der ausgefahrenen Stellung verschiebbar gehaltert sind, kann an dem Bodenelement eine erste Hebelstange schwenkbar gehaltert sein. Die erste Hebelstange kann sich parallel zu der ersten Linie erstrecken, wobei an der ersten Hebelstange eine Vielzahl von Hebelelementen unverdrehbar befestigt sind, wobei jedem der Halter, in denen die Rollelemente aus der ersten Gruppe gehaltert sind, ein Hebelelement zugeordnet ist, wobei die Halter, in denen die Rollelemente aus der ersten Gruppe gehaltert sind, Führungsschienen aufweisen, die ausgestaltet sind, ein freies Ende des dem Halter zugeordneten Hebelelements derart aufzunehmen, dass es in einer Richtung quer, vorzugsweise senkrecht, zu der Hochachse, um die der dem Hebelelement zugeordnete Halter drehbar ist, verschiebbar und parallel zu dieser Hochachse unverschiebbar ist, wobei sich die Führungsschienen senkrecht zu einer Erstreckungsrichtung der ersten Hebelstange erstrecken und wobei ein Hebelarm mit der ersten Hebelstange gekoppelt ist.

Bei dieser Anordnung bewirkt ein Verschwenken der Hebelelemente durch Verschwenken der Hebelstange mittels des Hebelarms zunächst eine Bewegung in einer Richtung quer zu der Hochachse, um die das in diesem Halter gelagerte Rollelement drehbar ist. Diese Bewegung wiederum bewirkt auch eine Änderung der vertikalen Position des ersten Endes der Hebelelemente. Dies führt dazu, dass die Halter, in deren Führungsschienen die ersten Enden der Hebelelemente aufgenommen sind, in vertikaler Richtung verfahren werden. Damit stellt dieser Aufbau eine weitere einfache Möglichkeit dar, das Verfahren der Halter zwischen der eingefahrenen und der ausgefahrenen Stellung zu bewirken.

Weiterhin ist es möglich, dass die Halter, in denen die Rollelemente einer zweiten der Gruppen gehaltert sind, entlang einer geradlinig verlaufenden zweiten Linie an dem Bodenelement zwischen der eingefahrenen und der ausgefahrenen Stellung verschiebbar gehaltert sind, wobei die zweite Linie parallel zu der ersten Linie verläuft, wobei an dem Bodenelement eine zweite Hebelstange schwenkbar gehaltert ist, die sich parallel zu der zweiten Linie erstreckt, wobei an der zweiten Hebelstange eine Vielzahl von zweiten Hebelelementen unverdrehbar befestigt ist, wobei jedem der Halter, in denen die Rollelemente aus der zweiten Gruppe gehaltert sind, ein zweites Hebelelement zugeordnet ist, wobei die Halter, in denen die Rollelemente aus der zweiten Gruppe gehaltert sind, zweite Führungsschienen aufweisen, die ausgestaltet sind, ein freies Ende des dem Halter zugeordneten zweiten Hebelelements derart aufzunehmen, dass es in einer Richtung quer, vorzugsweise senkrecht, zu der Hochachse, um die der dem zweiten Hebelelement zugeordnete Halter drehbar ist, verschiebbar und parallel zu dieser Hochachse unverschiebbar ist, wobei sich die zweiten Führungsschienen senkrecht zu einer Erstreckungsrichtung der zweiten Hebelstange erstrecken und wobei die zweite Hebelstange mit der ersten Hebelstange derart gekoppelt ist, dass eine Schwenkbewegung des Hebelarms zu einer Schwenkbewegung der zweiten Hebelstange führt.

Bei diesem Aufbau werden die Halter, die die Rollelemente der ersten Gruppe aufnehmen, und diejenigen Halter, die die Rollelemente der zweiten Gruppe aufnehmen, durch die Bewegung eines einzigen Hebelarms bewegt. Denn der mit der ersten Hebelstange gekoppelte Hebelarm ist ebenfalls mit der zweiten Hebelstange gekoppelt, sodass beim Verschwenken des Hebelarms beide Hebelstangen verschwenkt werden und so die Halter von parallel zueinander entlang der ersten und zweiten Linie angeordneten Rollelementen gleichzeitig zwischen der eingefahrenen und der ausgefahrenen Stellung bewegt werden. Dieses Prinzip kann auch auf weitere Gruppen von Rollelementen ausgedehnt werden.

Wenn schließlich die Vielzahl von Rollelementen mehrere Gruppen von Rollelementen umfasst und die Halter, in denen die Rollelemente einer ersten der Gruppen gehaltert sind, entlang einer geradlinig verlaufenden ersten Linie an dem Bodenelement zwischen der eingefahrenen und der ausgefahrenen Stellung verschiebbar gehaltert sind, kann das Bodenelement in einer weiteren bevorzugten Ausführungsform eine obere und eine untere Deckplatte aufweisen. Ein erstes und ein zweites Profilelement sind dann vorgesehen, die sich parallel zueinander und zu der ersten Linie zwischen der oberen und der unteren Deckplatte erstrecken, wobei die Halter, in denen die Rollelemente aus der ersten Gruppe gehaltert sind, an dem ersten und dem zweiten Profilelement anliegen, sodass sie in einer Richtung senkrecht zu der Drehachsenebene von diesen geführt sind, und wobei Führungswinkel mit Führungsflächen an der oberen und/oder der unteren Deckplatte vorgesehen sind, die in Querrichtung zu der ersten Linie verlaufen und an denen die Halter anliegen, in denen die Rollelemente aus der ersten Gruppe gehaltert sind.

Bei diesem Aufbau wird erreicht, dass das Bodenelement modular aufgebaut ist und daher kostengünstig hergestellt werden kann. Gleichzeitig wird auf einfache Weise eine Führung der Halter in dem Bodenelement verwirklicht, durch die die Halter eine Bewegung senkrecht zu der Drehachsenebene relativ zu dem Bodenelement ausführen können, gleichzeitig aber an einer Bewegung parallel zu dieser Ebene gehindert sind.

Im Folgenden wird die vorliegende Erfindung anhand einer bevorzugte Ausführungsbeispiele zeigenden Zeichnung erläutert, wobei
- Figur 1: eine perspektivische Darstellung eines Flugzeugs zeigt, in dem die Ausführungsbeispiele erfindungsgemäßer Frachtträger aufgenommen werden können,
- Figur 2: ein erstes Ausführungsbeispiel eines erfindungsgemäßen Frachtträgers im Längsschnitt zeigt, wobei die Halter in der ausgefahrenen Stellung sind,
- Figur 3: eine Schnittansicht eines Rollelements und des Halters dazu in einer ersten Position relativ zu einer Verschieberichtung zeigt,
- Figur 4: eine Schnittansicht des Rollelements aus Figur 3 in einer zweiten Position relativ zu der Verschieberichtung zeigt,
- Figur 5: einen Teil des Bodenelements des Ausführungsbeispiels aus Figur 2 im Querschnitt zeigt,
- Figur 6: einen Teil des Bodenelements des Ausführungsbeispiels aus Figur 2 im Längsschnitt zeigt,
- Figur 7: das Ausführungsbeispiel aus Figur 2 im Längsschnitt zeigt, wobei die Halter in der eingefahrenen Stellung sind,
- Figur 8: das Ausführungsbeispiel aus Figur 2 im Querschnitt zeigt, wobei Verriegelungszapfen in der Verriegelungsstellung sind,
- Figur 9: das Ausführungsbeispiel aus Figur 2 im Querschnitt zeigt, wobei Verriegelungszapfen ebenfalls in der Verriegelungsstellung sind, aber gegenüber der in Figur 6 gezeigten Ansicht verdreht sind,
- Figur 10: das Ausführungsbeispiel aus Figur 2 in Draufsicht zeigt, wobei Betätigungsstangen in der eingefahrenen Stellung sind, sodass sich deren erste Enden aus dem Bodenelement heraus erstrecken,
- Figur 11: einen Teil des Bodenelements des Ausführungsbeispiels aus Figur 2 im Querschnitt zeigt, wobei die obere und die untere Deckplatte über Profilelemente miteinander verbunden sind,
- Figur 12: einen Teil des Bodenelements des Ausführungsbeispiels aus Figur 2 im Längsschnitt zeigt, wobei die obere und die untere Deckplatte über die Profilelemente miteinander verbunden sind,
- Figur 13: einen Teil des Bodenelements eines zweiten Ausführungsbeispiels eines erfindungsgemäßen Frachtträgers im Querschnitt zeigt, wobei die Halter in der ausgefahrenen Stellung sind,
- Figur 14: einen Teil des Bodenelements des zweiten Ausführungsbeispiels im Längsschnitt zeigt, wobei die Halter in der ausgefahrenen Stellung sind,
- Figur 15: einen Teil des Bodenelements zweiten Ausführungsbeispiels im Querschnitt zeigt, wobei die Halter in der eingefahrenen Stellung sind,
- Figur 16: einen Teil des Elements des zweiten Ausführungsbeispiels im Längsschnitt zeigt, wobei die Halter in der eingefahrenen Stellung sind,
- Figur 17: eine perspektivische Darstellung des Betätigungsmechanismus für die Halter eines Frachtträgers gemäß einem Dritten Ausführungsbeispiel ist, wobei der Betätigungsmechanismus zwei parallel zueinander angeordnete Hebelstange umfasst, und
- Figur 18: eine Querschnittsansicht des in Figur 15 gezeigten Mechanismus ist.

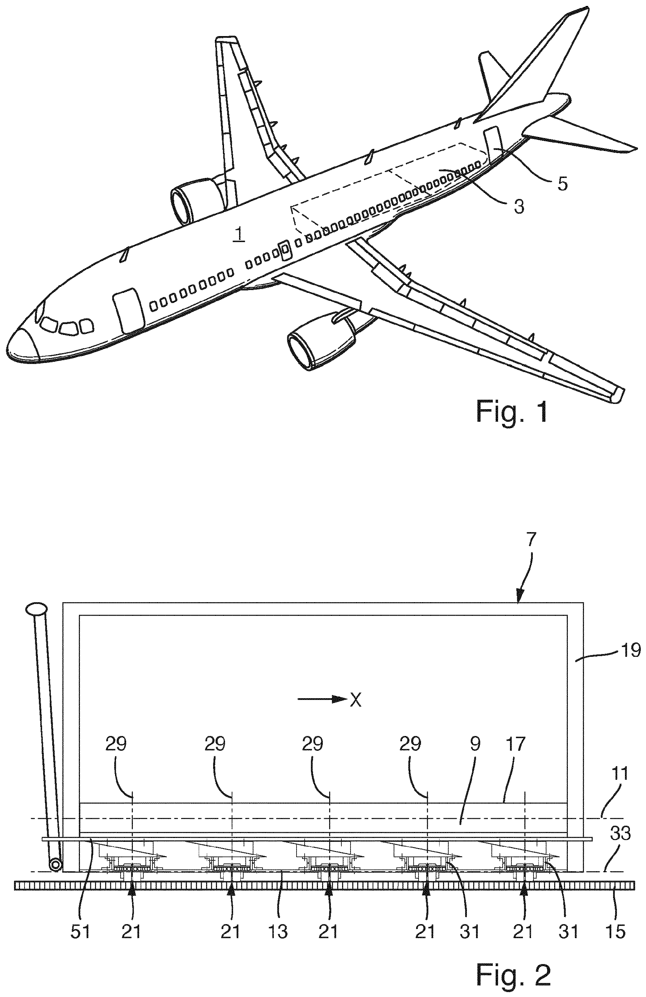

Im Folgenden werden Ausführungsbeispiele von Frachtträgern beschrieben, die vorgesehen sind, in ein in Figur 1 gezeigtes Flugzeug 1 geladen zu werden, wobei die Frachtträger sowohl in den eigentlichen Frachtraum 3 als auch durch die Passagierkabinentüren 5 in die Passagierkabine geladen werden können, wenn Letztere durch Entfernen der Passagiersitze zur Aufnahme von Fracht umgestaltet worden ist. Die Ausführungsbeispiele der Frachtträger sind dabei so ausgestaltet, dass sie in einfacher Weise sowohl innerhalb des eigentlichen Frachtraums 3 als auch innerhalb der Passagierkabine von Personal bewegt werden können.

Wie Figur 2 zu entnehmen ist, weist ein erstes Ausführungsbeispiel eines erfindungsgemäßen Frachtträgers 7 ein Bodenelement 9 auf, dass sich in dem hier gezeigten ersten Ausführungsbeispiel in einer Bodenelementebene 11 erstreckt, und das Bodenelements 9 weist eine Auflageseite 13 auf, die derart angeordnet und ausgestaltet ist, dass sie bei der normalen Verwendung des Frachtträgers 7 zu einer Bodenfläche 15 des Frachtbereichs beweist, in dem der Frachtträger 7 aufgenommen werden soll. Dabei kann es sich bei dem Frachtbereich einerseits um den Frachtraum eines Flugzeugs 1 aber auch um dessen Passagierkabine handeln.

Außerdem weist das Bodenelement 9 eine Grundfläche 17 auf, die auf der der Auflageseite 13 gegenüberliegenden Seite des Bodenelements 9 angeordnet ist, sodass die Grundfläche 17 von der Auflageseite 13 weg weist. Die Grundfläche 17 ist ausgestaltet, dass darauf Frachtelemente aufgenommen werden können, wobei in dem hier gezeigten Ausführungsbeispielen eine Umfangswandung 19 vorgesehen ist, die sich von der Grundfläche 17 nach oben weg erstreckt und einen Aufnahmeraum für die Frachtelemente seitlich begrenzt. Im hier gezeigten Ausführungsbeispiel ist die Umfangswandung 19 als ein Gitter ausgebildet. Es ist aber auch denkbar, dass die Umfangswarnung 19 als eine geschlossene Wand ausgebildet ist. Im Falle von zu kühlenden Frachtelementen, wie beispielsweise Chemikalien oder Arzneimitteln, ist ferner möglich, dass die Umfangswandung isolierende Eigenschaften besitzt oder darüber hinaus noch Aufnahmevorrichtungen für beispielsweise Trockeneis umfasst (nicht dargestellt). Natürlich ist zusätzlich oder alternativ zu einer solchen passiven Kühlung auch eine aktive Kühlung denkbar, die bei bekannten Kühlcontainern z.B. mittels Kompressoren und Stickstoff bereits seit langem Einsatz findet. Selbstverständlich ist nicht nur eine Kühlung, sondern auch eine Heizung möglich, so dass jedenfalls eine gewünschte Temperatur über einen längeren Zeitraum der Flugdauer und darüber hinaus gehalten werden kann.

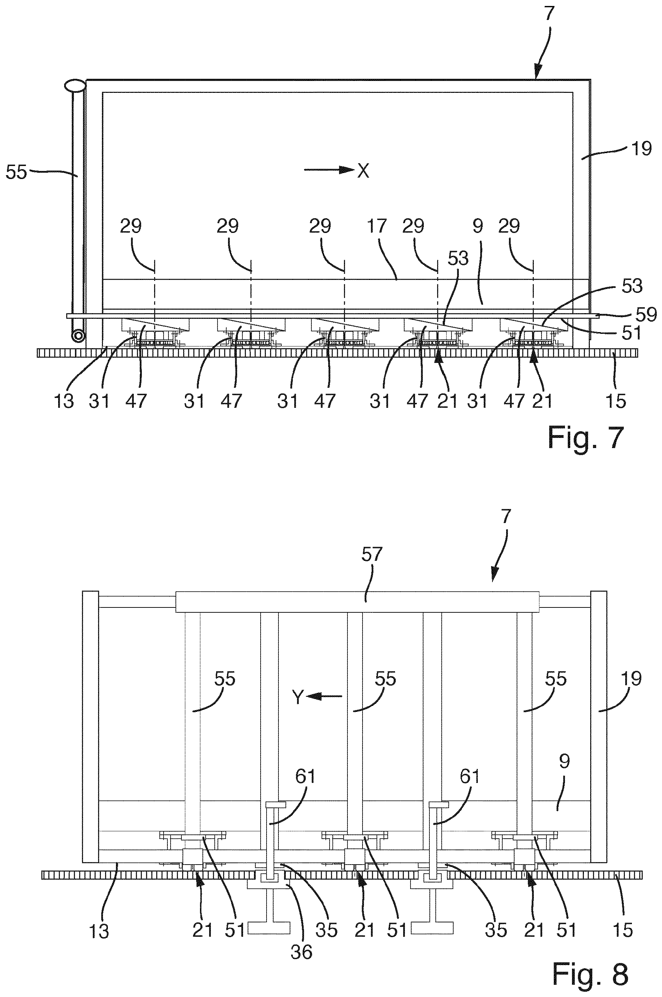

Wie weiter Figur 2 zu entnehmen ist, sind an der Auflageseite 13 des Bodenelements 9 eine Vielzahl von Rollelementen 21 vorgesehen. Die Figuren 2 und 8, die einen Längsschnitt und einen Querschnitt des Frachtträgers 7 wiedergeben, zeigen dabei, dass jeweils Gruppen von Rollelementen 21 entlang gerader Linien an dem Frachtträger 7 angebracht sind. Die Rollelemente 21, die sich entlang einer geraden Linie erstrecken, bilden dabei eine Gruppe von Rollelementen 21, sodass Figur 8 zeigt, dass sich bei dem hier dargestellten Ausführungsbeispielen die Rollelemente 21 in drei Gruppen unterteilen. Es sind aber auch andere Zahlen von geraden Linien und damit Gruppen möglich. In Figur 2 ist dann eine solche Gruppe von Rollelementen 21 in Seitenansicht zu erkennen.

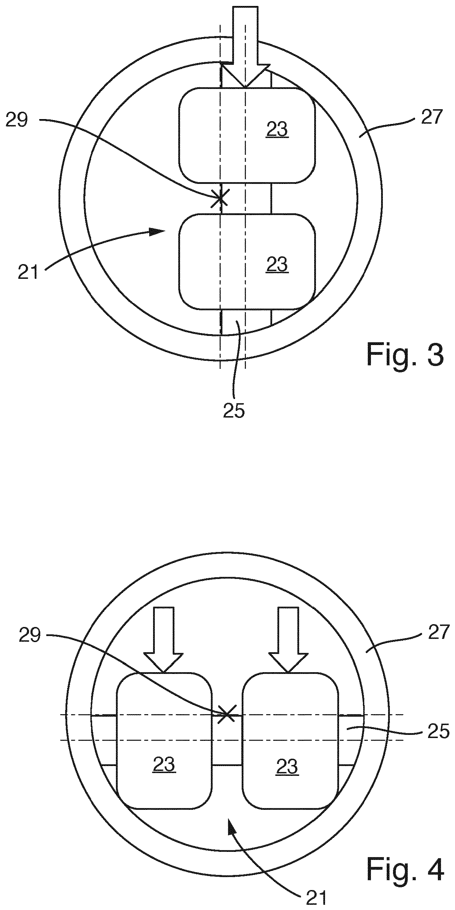

Die Figuren 3, 4 und 5 zeigen dabei, dass die Rollelemente 21 zwei parallel zueinander angeordnete Rollen 23 aufweisen, die beide um eine gemeinsame Drehachse 25 drehbar in einem Haltering 27 gehaltert sind, der wiederum drehbar um eine senkrecht zu der Drehachse 25 verlaufende Hochachse 29 in einem Halter 31 angebracht ist. Wie ebenfalls den Figuren 3 und 4 zu entnehmen ist, ist die Drehachse 25 relativ zu der Hochachse 29 so angeordnet, dass sich die Hochachse 29 nicht durch die Drehachse 25 erstreckt, sondern die Drehachse 25 ist versetzt zu der Hochachse 29 angeordnet. Damit ist die Drehachse 25 exzentrisch zu der Hochachse 29 angeordnet. Anders ausgedrückt verläuft jede Hochachse 29 parallel beabstandet zu einer Achse, die sich durch die Drehachse 25 des Rollelements 21 erstreckt. Der Effekt dieser exzentrischen Anordnung wird im Folgenden noch erläutert werden.

Wie ferner aus den Figuren 2 und 7 hervorgeht, sind die Halter 31, in denen die Rollelemente 21 aufgenommen sind, derart an dem Bodenelement 9 gehaltert, dass sie zwischen einer ausgefahrenen Stellung (Figur 2) und einer eingefahrenen Stellung (Figur 7) verfahren werden können, wobei sie in dem hier gezeigten Ausführungsbeispielen entlang der jeweiligen Hochachse 29, um die die Drehachse 25 des in dem Halter 31 aufgenommenen Rollelements 21 verdreht werden kann, verfahren werden. Dabei ist zu erkennen, dass dann, wenn die Halter 31 in der ausgefahrenen Stellung sind, der Abstand der Rollelemente 21 von der Grundfläche 17 größer ist, als dann, wenn die Rollenelemente 21 und die diese aufnehmenden Halter 31 in der eingefahrenen Stellung sind (siehe Figur 7).

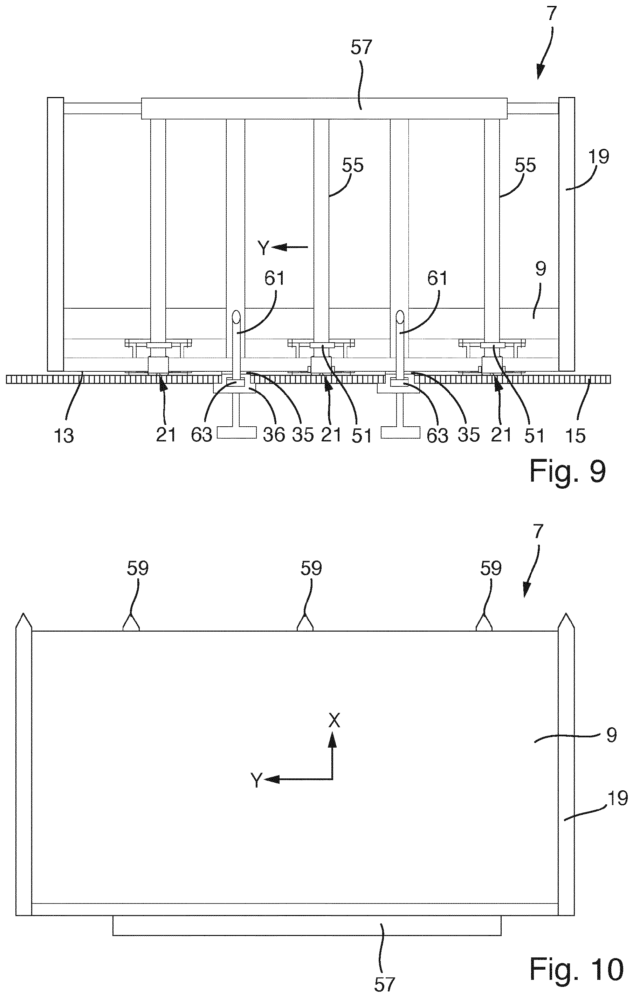

Weiterhin ist Figur 2 zu entnehmen, dass dann, wenn die Halter 31 in der ausgefahrenen Stellung sind, die Drehachsen 25 der Rollelemente 21 in einer gemeinsamen Drehachsenebene 33 angeordnet sind. Außerdem ist in den Figuren 8 und 9 zu erkennen, dass die Auflageseite 13 in den hier beschriebenen Ausführungsbeispielen mit Auflageelementen 35 versehen ist, die sich in einer gemeinsamen Auflageebene erstrecken, sodass dann, wenn die Halter 31 mit den Rollelementen 21 in der eingefahrenen Stellung sind, die Rollelemente 21 hinter der Auflageebene zurück stehen und die Auflageelemente 35 auf der Bodenfläche 15 des Frachtbereichs aufliegen. Dabei ist es insbesondere möglich, dass die Auflageelemente 35 derart an der Auflageseite 13 des Bodenelements 9 angeordnet sind, dass sie entsprechend den Schienen 36 in der Bodenfläche 15 der Passagierkabine des Flugzeugs 1 beanstandet sind, in der die Frachtträger 7 aufgenommen werden sollen. Dann ist sichergestellt, dass die Lasten aufgrund der Frachtträger 7 dort in die Bodenfläche 15 eingeführt werden, wo diese sowieso dafür ausgestaltet ist Lasten aufzunehmen.

Bereits in Zusammenhang mit den Figuren 3 und 4 ist beschrieben worden, dass bei jedem Rollelement 21 die Hochachse 29 senkrecht zu der Drehachse 25, um die das Rollelement 21 drehbar ist, versetzt ist. Insbesondere ist bei jedem Rollelement 21 die Hochachse 29 parallel beabstandet zu einer Achse, die sich durch die Drehachse 25 des Rollelements 21 und senkrecht zu der Drehachsenebene 33 erstreckt. Dies hat die in Figur 3 und 4 mithilfe der Pfeile angedeuteten Wirkung. Wenn der Frachtträger 7 von einer Bedienperson entgegen der Richtung des Pfeils mit einer Kraft beaufschlagt wird, um den Frachtträger 7 entgegen der Richtung des Pfeils zu verschieben, bewirkt die exzentrische Anordnung der Drehachse 25, dass sich die Drehachse 25 um die Hochachse 29 herum bewegt und so ausrichtet, dass sie senkrecht zu der Richtung steht, entgegen derer der Frachtträger 7 bewegt werden soll. Die exzentrische Anordnung der Drehachse 25 relativ zu den Hochachse 29 hat also den Effekt, dass sich die Rollelemente 21 selbsttätig so ausrichten, dass der Widerstand, den sie einem Verschieben auf der Bodenfläche 15 entgegensetzen, minimiert wird.

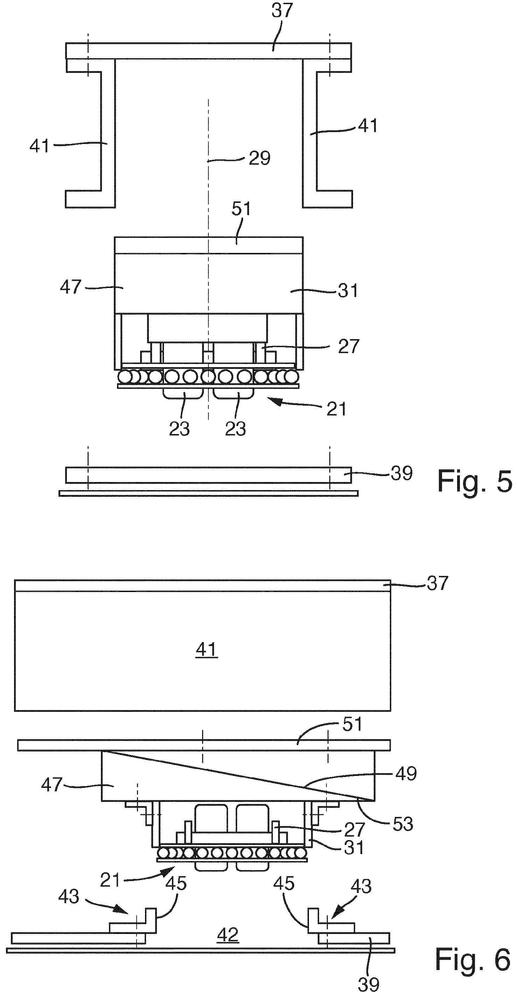

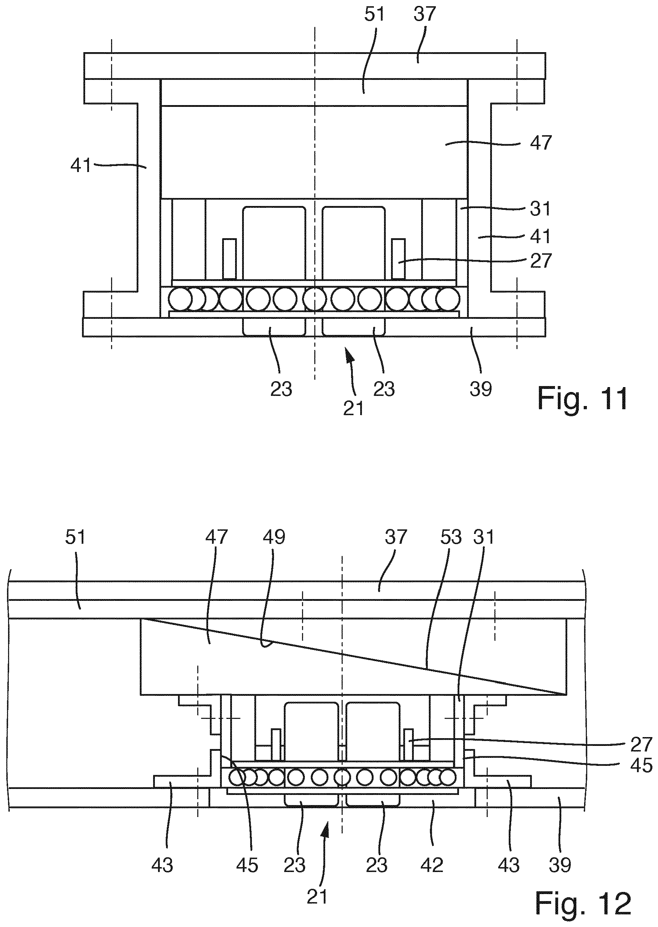

Im Folgenden wird nun der Mechanismus beschrieben, mit dem bei dem ersten Ausführungsbeispiel die Halter 31 relativ zu dem Bodenelement 9 entlang der Hochachse 29 zwischen der eingefahrenen und der ausgefahrenen Stellung verschoben werden können. Dieser Mechanismus ist in den Figuren 5 und 6 in einer auseinandergezogenen Form gezeigt, während die Figuren 11 und 12 den Mechanismus in seiner zusammengesetzten Form wiedergegeben.

In diesem Zusammenhang ist anzumerken, dass das Bodenelement 9 bei den hier beschriebenen Ausführungsbeispielen allgemein eine obere Deckplatte 37 und eine untere Deckplatte 39 aufweist, zwischen denen Profilelemente 41 angeordnet sind, wobei die Profilelemente 41 die obere Deckplatte 37 und die untere Deckplatte 39 miteinander verbinden. Zwischen jeweils zwei Profilelementen 41 sind die Halter 31 angeordnet, an denen die Rollelemente 21 einer ersten Gruppe von Rollelementen an dem Frachtträger 7 angebracht sind. Da die Rollelemente 21 an dem Frachtträger 7 mehrere Gruppen umfassen und die Rollelemente 21 einer Gruppe entlang einer sich geradlinig erstreckenden Linie an dem Bodenelement 9 angeordnet sind, erstrecken sich die Profilelemente 41, zwischen denen die Halter 31 der Gruppe von Rollelemente 21 angeordnet sind, entlang der Linie, zu der die Rollelemente 21 an dem Frachtträger 7 ausgerichtet sind. In gleicher Weise sind bei den hier beschriebenen Ausführungsbeispielen die Rollelemente 21 der anderen Gruppen ebenfalls entlang der jeweiligen geraden Linie an dem Bodenelement 7 angebracht.

Die Halter 31 mit den daran angebrachten Rollelemente 21 weisen eine Breite auf, die dem Abstand der Profilelemente 41 entspricht, sodass die Halter 31 zwischen den Profilelementen 41 in Richtung der Hochachse 29 geführt sind. Dies ist den Figuren 5 sowie 11 zu entnehmen. Außerdem sind in der unteren Deckplatte 39 Öffnungen 42 vorgesehen, durch die sich die Rollelemente 21 erstrecken können, wenn sie in die ausgefahrene Stellung verfahren werden. Benachbart zu den Öffnungen 42, sind an der unteren Deckplatte 39 Führungswinkel 43 befestigt, die sich quer zu der Linie, entlang derer die Rollelemente 21 der Gruppe an dem Bodenelement 9 angeordnet sind, erstreckende Führungsflächen 45 aufweisen, um die Halter 31 quer zu dieser Linie zu führen.

Durch die Profilelemente 41 und die Führungswinkel 43 mit den Führungsflächen 45 werden die Halter 31 also in einfacher Weise so geführt, dass sie nur eine vertikale Bewegung senkrecht zu der Drehachsenebene 33 ausführen können, während sie an einer Bewegung parallel zu der Drehachsenebene 33 durch diese Bauteile gehindert sind.

Bei dem in den Figuren 2 bis 12 gezeigten ersten Ausführungsbeispiel eines Frachtträgers 7 werden die Halter 31 mit den Rollelementen 21 jeweils einer Gruppe dadurch zwischen der eingefahrenen und der ausgefahrenen Stellung verfahren, dass die Halter 31 oberhalb der Rollelemente 21 einen Keil 47 aufweisen, an dem eine geneigt unter einem Winkel von weniger als 90° zu der Hochachse 29 des jeweiligen Halters 31 verlaufende Eingriffsfläche 49 vorgesehen ist. Demnach weist also jeder Halter 31 eine Eingriffsfläche 49 auf, die geneigt ist zu der Hochachse 29, um die das Rollelemente 21 in dem Halter 31 drehbar ist.

Weiterhin ist für jede Gruppe von Rollelementen 21 bei dem ersten Ausführungsbeispiel eines Frachtträgers 7 eine Betätigungsstange 51 vorgesehen, die sich entlang der Linie erstreckt, entlang derer die Rollelemente 21 der jeweiligen Gruppe angeordnet sind. Insbesondere erstreckt sich die Betätigungsstange 51 zwischen den Profilelementen **41** und wird durch diese entlang der Linie, zu der die Rollelemente 21 ausgerichtet sind, seitlich geführt. Die Betätigungsstange 51 weist geneigt verlaufende Gegenflächen 53 auf, wobei jedem Halter 31 entlang der Linie, entlang derer sich die Betätigungsstange 51 erstreckt, eine Gegenfläche 53 zugeordnet ist. Die Gegenflächen 53 liegen in dem hier beschriebenen Ausführungsbeispiel flächig an den Eingriffsflächen 49 an.

Wenn die Betätigungsstange 51 parallel zu den Profilelementen 51 in dem Bodenelement 9 von einer eingeschobenen Stellung (Figur 7) in eine ausgezogene Stellung (Figur 2) verschoben wird, gleiten die Gegenflächen 53 über die Eingriffsflächen 49 und bewirken dabei, dass die Halter 31 von der eingefahrenen Stellung in die ausgefahrenen Stellung bewegt werden. Wenn umgekehrt die Betätigungsstange 51 von der ausgezogenen in die eingezogene Stellung verschoben wird, können die Halter 31 zurück aus der ausgefahrenen Stellung in die eingefahrene Stellung in das Bodenelement 9 hineingleiten, wobei sie dabei von dem Profilelementen 41 und den Führungswinkeln 43 geführt werden.

Zum Bewegen der Betätigungsstangen 51 sind an dem Bodenelement 9 Betätigungsarme 55 schwenkbar gehaltert, die mit den Betätigungsstangen 51 gekoppelt sind, sodass durch Verschwenken der Betätigungsarme 55 die Betätigungsstangen 51 zwischen der eingeschobenen und der ausgezogenen Stellung hin und her bewegt werden können. In dem hier dargestellten bevorzugten Ausführungsbeispiel sind die Betätigungsstangen 55 zudem mittels einer Querstange 57 für eine gemeinsame Bewegung gekoppelt.

Den Figuren 2, 7 und 10 kann zudem entnommen werden, dass die Betätigungsstangen 51 derart ausgebildet sind, dass ein Ende 59 davon sich in einem ersten Umfang aus dem Bodenelement 9 heraus erstreckt, wenn die Betätigungsstange 51 in der eingeschobenen Stellung ist. Ist die Betätigungsstange 51 jedoch in der ausgezogenen Stellung, steht das Ende 59 entweder gar nicht oder nur in geringerem Umfang über den Rand oder die Kante des Bodenelements 9 über.

Darüber hinaus weisen die Bodenelemente 9 gemäß den hier beschriebenen Ausführungsbeispielen an der Kante, die dem vorstehenden Ende 59 der Betätigungsstange 51 gegenüberliegt, Aufnahmeaussparungen auf, die ausgebildet sind, die Enden 59 der Betätigungsstange 51 eines weiteren Frachtträgers 7 aufzunehmen. Auf diese Weise ist es möglich, dass dann, wenn die Frachtträger 7 ihre Endstellung auf der Bodenfläche 15 in dem Frachtbereich erreicht haben, in der benachbarten Frachtträger 7 unmittelbar aneinander anliegen, die Betätigungsstangen 51 mittels der Betätigungsarme 55 in die eingeschobene Stellung bewegt werden und dabei zum einen die Halter 31 mit den Rollelemente 21 in die eingefahrenen Stellung bewegt werden, sodass die Frachtträger nicht mehr ohne weiteres über die Bodenfläche 15 geschoben werden können, und zum anderen die Enden 59 der Betätigungsstangen 51 eines ersten Frachtträgers 7 mit den Aufnahmeaussparungen eines weiteren Frachtträgers 7 eingreifen und diese so miteinander verriegelt werden. Auf diese Weise wird ein Verbund von Frachtträgern 7 erzeugt, durch den verhindert wird, dass sich die Frachtträger 7 im Frachtbereich insbesondere bei Landungsstößen in vertikaler Richtung bewegen können.

Schließlich ist in den Figuren 8 und 9 gezeigt, dass die Ausführungsbeispiele der erfindungsgemäßen Frachtträger 7 Verriegelungszapfen 61 aufweisen, die an dem Bodenelement 9 des Frachtträgers angebracht sind und in einer Richtung senkrecht zur Drehachsenebene 33 und damit auch senkrecht zum Bodenelements 9 zwischen einer Verriegelungsstellung und einer Lösestellung verschoben werden können, wobei in den Figuren 8 und 9 die Verriegelungszapfen 61 jeweils in der Verriegelungsstellung dargestellt sind.

Dabei ist es auch möglich, dass die Verriegelungszapfen 61 derart an dem Bodenelement 9 angebracht sind, dass sie parallel zu dessen Ebene und damit parallel zur Drehachsenebene 33 und Auflageebene an dem Bodenelement 9 verschoben werden können, um die Position der Verriegelungsstellung anzupassen an die Schienen 36 für Passagiersitze in dem Frachtbereich des Flugzeugs, in dem die Frachtträger 7 aufgenommen werden sollen.

Bei dem in den Figuren 8 und 9 gezeigten Ausführungsbeispiel sind die Verriegelungszapfen 61 mit einem Riegelelement 63 an dessen freiem Ende versehen, sodass die Verriegelungszapfen 61 mit den Schienen 36 für Passagiersitze in der Bodenfläche 15 eines Frachtbereichs durch Verdrehen der Verriegelungszapfen 61 so in Eingriff gebracht werden können, dass die Verriegelungszapfen 61 dann nicht mehr vertikal in die Lösestellung verschoben werden können, ohne die Verriegelungszapfen 61 zurück zu drehen. Dadurch kann ebenfalls eine Verriegelung der Frachtträger 7 gegen eine Bewegung in vertikaler Richtung erreicht werden.

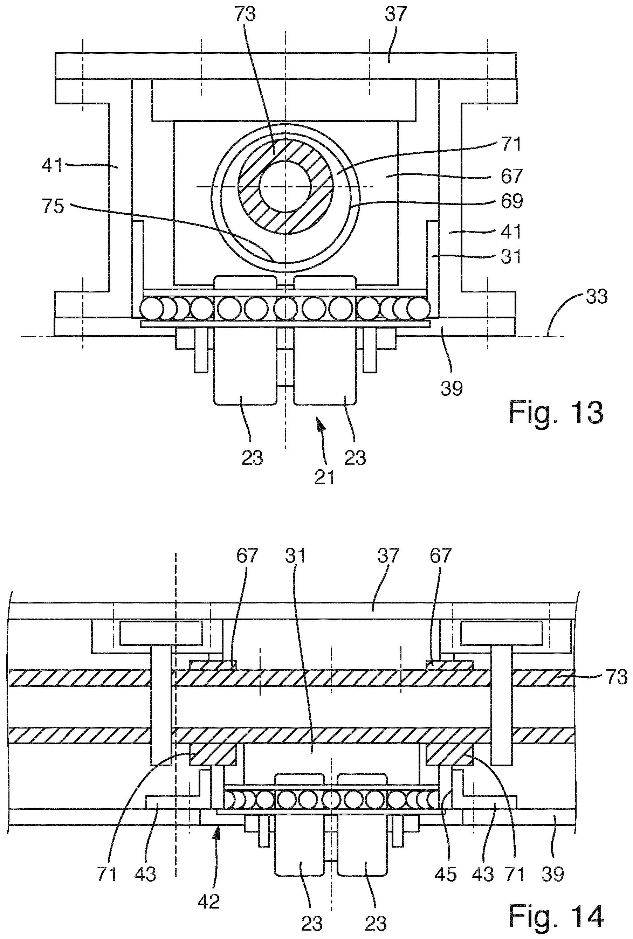

In den Figuren 13 bis 16 ist der Mechanismus zum Verfahren der Halter 31, in denen die Rollelemente 21 einer Gruppe der Rollelemente gehaltert sind, von einem zweiten Ausführungsbeispiel eines erfindungsgemäßen Frachtträgers 7 dargestellt. Dieses Ausführungsbeispiel entspricht mit Ausnahme des Verstellmechanismus dem ersten Ausführungsbeispiel, sodass nachfolgend nur die Unterschiede zum ersten Ausführungsbeispiel erläutert werden.

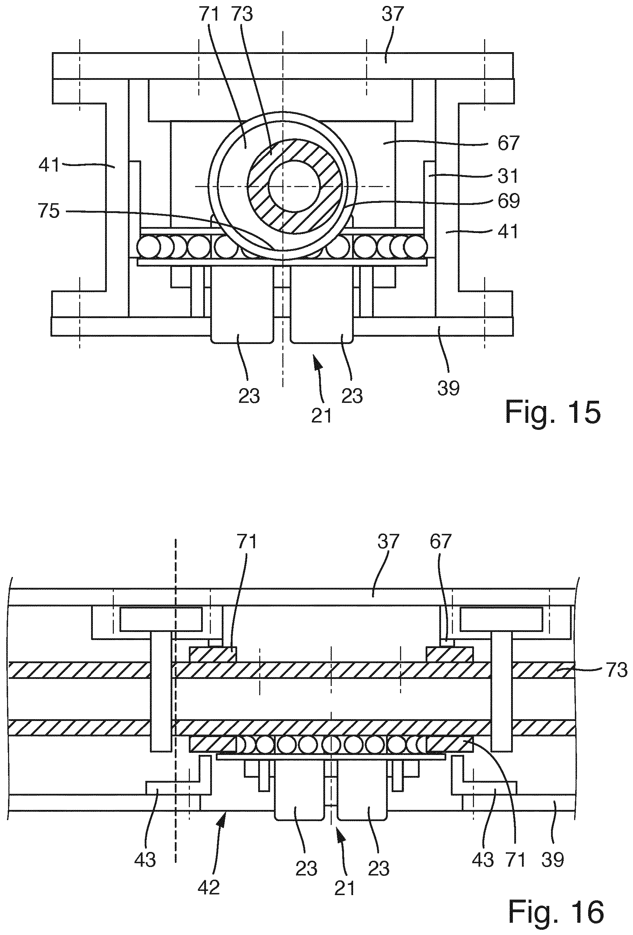

Auch in dem zweiten Ausführungsbeispiel sind in dem Bodenelement 9 wieder Profilelemente 41 vorgesehen, die zwischen einer oberen Deckplatte 37 und einer unteren Deckplatte 39 vorgesehen sind, und zwischen jeweils zwei dieser Profilelemente 41 sind die Halter 31 angeordnet, an denen die Rollelemente 21 einer ersten Gruppe von Rollelementen 21 gehaltert sind. Ferner weisen bei diesem Ausführungsbeispiel die Halter 31 einen Führungsblock 67 auf, in dem kreisförmige Durchgangsbohrungen 69 ausgebildet sind. Die Innenfläche der Durchgangsbohrungen 69 bildet eine Anlagefläche, an der Nockenelemente 71 anliegen, die an einer Nockenstange 73 drehfest angebracht sind, die sich zwischen den Profilelementen 41 parallel zu der Linie erstreckt, entlang derer die Rollelemente 21 der ersten Gruppe angeordnet sind. Dabei sind bei dem hier beschriebenen Ausführungsbeispiel jedem Halter 31, der eines der Rollelemente 21 der ersten Gruppe hält, wenigstens ein Nockenelement 71 zugeordnet, die jeweils in einer Durchgangsbohrung 69 in einem Führungsblock 67 aufgenommen sind. Im vorliegenden Ausführungsbeispiel sind jedem Halter 31 zwei Nockenelemente 71 zugeordnet, die in zwei Durchgangsbohrungen in dem Führungsblock 67 aufgenommen sind, wie dies aus den Figuren 14 und 16 hervorgeht.

Die Nockenelemente 71 sind in diesem Ausführungsbeispiel kreisringförmig ausgebildet, sodass sie vollflächig an der Innenfläche der Durchgangsbohrungen 69 in den Führungsblöcken 67 anliegen. Wesentlich ist aber, dass die Nockenelemente 71 an einem Bodenabschnitt 75 der Anlagefläche anliegen, wobei dieser Bodenabschnitt 75 zwischen der Nockenstange 73 und der Drehachsenebene 33 angeordnet ist. Dadurch, dass die Nockenelemente 71 zumindest an dem Bodenabschnitt 75 anliegen, können die Nockenelemente 71 die Halter 31 aus dem Bodenelement 9 in die ausgefahrene Stellung drücken oder den Haltern 31 ermöglichen, sich zurück in die eingefahrene Stellung in das Bodenelements 9 zu bewegen. Dies kann durch Drehung der Nockenstange 73 bewerkstelligt werden.

Dadurch, dass die Nockenelemente 71 kreisringförmig ausgebildet sind und bei diesem Ausführungsbeispiel vollflächig an der Innenfläche der Durchgangsbohrungen 69 anliegen, wird erreicht, dass die Last von den Haltern 31 über einen großen Flächenabschnitt auf die Nockenelemente 71 übertragen wird, sodass dieser Aufbau außerordentlich stabil ist.

Allerdings ist es bei diesem Aufbau auch erforderlich, dass die Nockenstange 73 parallel zur Drehachsenebene 33 senkrecht zu den Profilen 41 verschiebbar zu diesen 41 gehaltert ist, während sie senkrecht zu der Drehachsenebene 33 unverschiebbar sein muss.

Die Verschiebbarkeit parallel zur Drehachsenebene 33 ist deswegen erforderlich, da sich die Halter 31 aufgrund der Profile 41 und deren Anlage daran nicht parallel zur Drehachsenebene 33 senkrecht zu den Profilen 41 verschieben lassen. Da die Nockenelemente 71 bei deren Drehung in den Durchgangsbohrungen 69 jedoch vollflächig an diesen anliegen und daher seitlich ausgelenkt werden, muss die Nockenstange 73 dieser Bewegung folgen können. Sie darf aber senkrecht zur Drehachsenebene 33 nicht verschiebbar sein, da es sonst nicht dazu käme, dass die Halter 31 bei einer Verstellung der Nockenstange 73 vertikal verfahren werden.

Ein Vergleich der Figuren 13 und 14 mit den Figuren 15 und 16 zeigt noch einmal die Funktionsweise des Verstellmechanismus für die Halter 31 gemäß dem zweiten Ausführungsbeispiel.

In den Figuren 13 und 14 ist zu erkennen, dass die Nockenelemente 71 so ausgerichtet sind, dass der am weitesten von der Längsachse der Nockenstange 73 beanstandete Bereich nach unten weist, sodass dadurch der Halter 31 mit den Rollenelement 21 aus dem Bodenelement 9 heraus in die ausgefahrene Stellung gedrückt wird. Wenn die Nockenstange jedoch relativ zu dieser Stellung um 90° verdreht wird, wie dies in den Figuren 15 und 16 gezeigt ist, kann sich der Halter 31 mit dem Rollelemente 21 in das Bodenelement 9 hinein in die eingefahrene Stellung bewegen. In diesem Fall stehen die Rollelemente 21 nicht mehr über die Auflageebene vor und der Frachtträger 7 liegt mit seinen daran vorgesehenen Auflageelementen 35 auf der Bodenfläche 15 auf.

Um die Nockenstange 73 zu verschwenken, ist es vorteilhaft, wenn an deren aus dem Bodenelement 9 herausstehenden Ende ein Betätigungsarm vorgesehen ist, mit dem die Nockenstange 73 zwischen ihren beiden Schwenkstellungen verschwenkt werden kann.

Somit ermöglicht auch das zweite Ausführungsbeispiel eines erfindungsgemäßen Frachtträgers 7 in einfacher Weise, die an dem Bodenelement 9 angebrachten Rollelemente 21 zwischen der eingefahrenen Stellung und der ausgefahrenen Stellung zu verfahren.

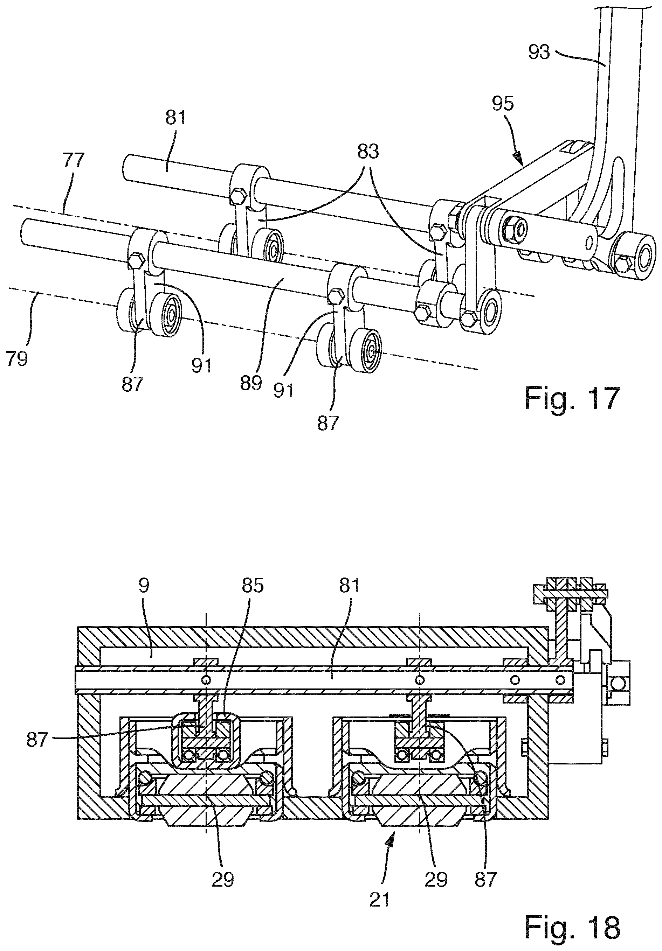

Schließlich ist in den Figuren 17 und 18 der Betätigungsmechanismus aus einem dritten Ausführungsbeispiel zum Verfahren der Halter 31 dargestellt, an denen die Rollelemente 21 einer ersten Gruppe und einer zweiten Gruppe von Rollelementen 21 angebracht sind. Dabei sind die Rollelemente 21 der ersten Gruppe entlang einer ersten Linie 77 angeordnet, während die Rollelemente 21 der zweiten Gruppe entlang einer zweiten Linie 79 angeordnet sind, die in Figur 17 jeweils nur schematisch dargestellt sind. Im Übrigen entspricht das dritte Ausführungsbeispiel den zuvor beschriebenen Ausführungsbeispiel, und im Folgenden wird lediglich der unterschiedliche Betätigungsmechanismus erläutert, mit dem die Halter 31 verfahren werden.

Der Mechanismus des dritten Ausführungsbeispiels umfasst eine erste Hebelstange 81, die sich parallel zu der ersten Linie 77 erstreckt und an der drehfest bzw. unverdrehbar erste Hebelelemente 83 angebracht sind. Wie aus Figur 18 zu erkennen ist, ist jedem Halter 31, der Rollelemente 21 der ersten Gruppe aufnimmt, ein erstes Hebelelement 83 zugeordnet, wobei jeder Halter 31 zudem eine Führungsschiene 85 aufweist, die sich in dem hier dargestellten dritten Ausführungsbeispiel senkrecht zu einer Erstreckungsrichtung der ersten Hebelstange 81 erstreckt und zudem senkrecht zu der Hochachse 29 verläuft, um die das die Drehachse des Rollelements 21, das in dem Halter 31 gehaltert ist, drehbar ist. In den Führungsschienen 85 sind die freien Enden 87 der ersten Hebelelemente 83, die entfernt von der ersten Hebelstange 81 sind, mittels Kugellagern geführt.

Ganz analog ist eine zweite Hebelstange 89 vorgesehen, die sich parallel zu der zweiten Linie 79 erstreckt und an der zweite Hebelelemente 91 drehfest angebracht sind, deren freie Enden ebenfalls in Führungsschienen in den Haltern 31 aufgenommen sind, an denen die Rollelemente 21 gehaltert sind, die zu der zweiten Gruppe gehören, die entlang der zweiten Linie 79 angeordnet sind.

Wenn die Hebelstangen 81, 89 verschwenkt werden, werden auch die daran angebrachten Hebelelemente 83, 91 verschwenkt, wodurch die Halter 31 mit den daran gehalterten Rollelementen 21 in vertikaler Richtung bewegt werden.

Wie weiter in Figur 17 zu erkennen ist, ist an der ersten Hebelstange 81 ein Hebelarm 93 befestigt, mit dem die erste Hebelstange 81 um ihre Längsachse verschwenkt werden kann. Außerdem ist zwischen der ersten Hebelstange 81 und in der zweiten Hebelstange 89 eine Hebelarmanordnung 95 vorgesehen, durch die die erste Hebelstange 81 und die zweite Hebelstange miteinander gekoppelt sind. Wenn die erste Hebelstange 81 mittels des Hebelarms 93 verschwenkt wird, führt die Hebelarmanordnung 95 dazu, dass die zweite Hebelstange 89 mit verschwenkt wird. Demnach führt eine Schwenkbewegung des Hebelarms 93 auch zu einer Schwenkbewegung der zweiten Hebelstange 89. Auch bei dem dritten Ausführungsbeispiel können also die Rollelemente 21 in einfacher Weise zwischen der eingefahrenen und der ausgefahrenen Stellung bewegt werden.

### Bezugszeichenliste:

- 1: Flugzeug
- 3: Frachtraum
- 5: Passagierkabinentür
- 7: Frachtträger
- 9: Bodenelement
- 11: Bodenelementebene
- 13: Auflageseite
- 15: Bodenfläche
- 17: Grundfläche
- 19: Umfangswandung
- 21: Rollelement
- 23: Rollen
- 25: Drehachse
- 27: Haltering
- 29: Hochachse
- 31: Halter
- 33: Drehachsenebene
- 35: Auflageelemente
- 36: Schiene
- 37: obere Deckplatte
- 39: untere Deckplatte
- 41: Profilelement
- 42: Öffnung
- 43: Führungswinkel
- 45: Führungsflächen
- 47: Keil
- 49: Eingriffsfläche
- 51: Betätigungsstange
- 53: Gegenfläche
- 55: Betätigungsarm
- 57: Querstange
- 59: Ende - Betätigungsstange
- 61: Verriegelungszapfen
- 63: Riegelelement
- 67: Führungsblock
- 69: Durchgangsbohrung
- 71: Nockenelement
- 73: Nockenstange
- 75: Bodenabschnitt
- 77: erste Linie
- 79: zweite Linie
- 81: erste Hebelstange
- 83: erste Hebelelemente
- 85: Führungsschiene
- 87: freies Ende - Hebelelement
- 89: zweite Hebelstange
- 91: zweite Hebelelemente
- 93: Hebelarm
- 95: Hebelarmanordnung

## Patentansprüche

1. Frachtträger zur Aufnahme in den Frachtbereich (3) eines Flugzeugs (1), mit einem Bodenelement (9), das eine Auflageseite (13) aufweist, die derart an dem Frachtträger (7) angeordnet ist, dass der Frachtträger (7) so auf einer Bodenfläche (15) eines Frachtbereichs (3) eines Flugzeugs (1) aufliegen kann, dass die Auflagefläche (13) der Bodenfläche (15) gegenüber liegt,
wobei der Frachtträger (7) derart ausgestaltet ist, so über die sich in einer Bodenebene erstreckende Bodenfläche (15) bewegt zu werden, dass die Auflageseite (13) dabei zu der Bodenfläche (15) weist,
wobei das Bodenelement (9) eine Grundfläche (17) aufweist, die auf der Seite des Bodenelements (9) angeordnet ist, die von der Auflageseite (13) weg weist,
wobei die Auflageseite (13) mit einer Vielzahl von Rollelementen (21) versehen ist,
wobei jedes der Rollelemente (21) an einem Halter (31) um eine Drehachse (25) drehbar gehaltert ist, wobei jeder der Halter (31) zwischen einer ausgefahrenen Stellung und einer eingefahrenen Stellung verfahrbar ist, wobei der Abstand der Rollelemente (25) von der Grundfläche (17) in der ausgefahrenen Stellung größer ist als in der eingefahrenen Stellung,
wobei die Drehachsen (25) der Rollelemente (21), wenn die Halter (31) in der ausgefahrenen Stellung sind, in einer gemeinsamen Drehachsenebene (33) angeordnet sind,
wobei die Rollelemente (21) derart an dem Bodenelement (9) gehaltert sind, dass die Drehachse (25) jedes der Rollelemente (21) um eine Hochachse (29) drehbar ist, wobei die Hochachse (29) parallel beabstandet zu einer Achse verläuft, die sich durch die Drehachse (25) des Rollelements (21) und senkrecht zu der Drehachsenebene (33) erstreckt,
wobei die Vielzahl von Rollelementen (21) mehrere Gruppen von Rollelementen (21) umfasst, wobei die Halter (31), in denen die Rollelemente (21) einer ersten der Gruppen gehaltert sind, entlang einer geradlinig verlaufenden ersten Linie an dem Bodenelement (9) zwischen der eingefahrenen und der ausgefahrenen Stellung verschiebbar gehaltert sind, wobei die erste Linie parallel zu der Drehachsenebene (33) verläuft,
**dadurch gekennzeichnet, dass**
jeder der Halter (31), in denen die Rollelemente (21) der ersten Gruppen gehaltert sind, eine geneigt unter einem Winkel von weniger als 90° zu der Hochachse (29) verlaufende Eingriffsfläche (49) aufweist,
wobei eine sich entlang der ersten Linie erstreckende Betätigungsstange (51) vorgesehen ist, die den geneigt verlaufenden Eingriffsflächen (49) gegenüberliegende und an den Eingriffsflächen (49) flächig anliegende Gegenflächen (53) aufweist und
die Betätigungsstange (51) entlang der ersten Linie verschiebbar in dem Bodenelement (9) gehaltert ist, sodass die Betätigungsstange (51) zwischen einer eingeschobenen und einer ausgezogenen Stellung verschiebbar ist, wobei ein Verschieben der Betätigungsstange (51) von der eingeschobenen in die ausgezogene Stellung ein Verfahren der Halter (31), in denen die Rollelemente (21) der ersten Gruppe gehaltert sind, aus der eingefahrenen in die ausgefahrene Stellung bewirkt.

2. Frachtträger nach Anspruch 1, wobei jeder der Halter (31) entlang der Hochachse (29) relativ zu dem Bodenelement (9) zwischen der eingefahrenen und der ausgefahrenen Stellung verfahrbar ist.

3. Frachtträger nach Anspruch 1 oder 2, wobei die Auflageseite (13) Auflageelemente (35) aufweist, die in einer Auflageebene angeordnet sind, wobei die Rollelemente (21) in der ausgefahrenen Stellung der Halter (31) über die Auflageebene vorstehen und in der eingefahrenen Stellung hinter diese zurückversetzt sind.

4. Frachtträger nach Anspruch 3, wobei an dem Bodenelement (9) sich senkrecht zur Auflageebene erstreckende Verriegelungszapfen (61) vorgesehen sind, die an dem Bodenelement (9) senkrecht zur Auflageebene verschiebbar gehaltert sind, sodass die Verriegelungszapfen (61) zwischen einer Lösestellung und einer Verriegelungsstellung verschiebbar sind, und
wobei in deren Verriegelungsstellung ein freies Ende der Verriegelungszapfen (61) über die Auflageebene vorsteht und in deren Lösestellung das freie Ende der Verriegelungszapfen (61) in der Auflageebene oder auf der von der Drehachsenebene (33) abgewandten Seite der Auflageebene angeordnet ist.

5. Frachtträger nach Anspruch 4, wobei die Position der Verriegelungszapfen (61) an dem Bodenelement (9) parallel zur Auflageebene einstellbar ist.

6. Frachtträger nach einem der Ansprüche 1 bis 5, wobei ein Betätigungsarm (55) vorgesehen ist, der schwenkbar an dem Bodenelement (9) gehaltert ist, wobei die Betätigungsstange (51) an dem Betätigungsarm (55) angelenkt ist und ein Verschwenken des Betätigungsarms (55) gegenüber dem Bodenelement (9) ein Verschieben der Betätigungsstange (51) entlang der ersten Linie bewirkt.

7. Frachtträger nach einem der Ansprüche 1 bis 6, wobei ein erstes Ende (59) der Betätigungsstange (51) in der eingeschobenen Stellung über eine Kante des Bodenelements in einem ersten Umfang vorsteht, und wobei das erste Ende (59) der Betätigungsstange (51) in das Innere des Bodenelements (9) zurückgezogen ist oder das erste Ende (59) in einem zweiten Umfang vorsteht, der geringer als der erste Umfang ist, wenn die Betätigungsstange (51) in der ausgezogenen Stellung ist.

8. Frachtträger nach Anspruch 7, wobei das Bodenelement (9) in einer dem ersten Ende der Betätigungsstange (51) gegenüberliegenden Fläche eine Aufnahmeaussparung aufweist, die angepasst ist, das erste Ende (59) einer Betätigungsstange (51) aufzunehmen.

9. Frachtträger zur Aufnahme in den Frachtbereich (3) eines Flugzeugs (1), mit einem Bodenelement (9), das eine Auflageseite (13) aufweist, die derart an dem Frachtträger (7) angeordnet ist, dass der Frachtträger (7) so auf einer Bodenfläche (15) eines Frachtbereichs (3) eines Flugzeugs (1) aufliegen kann, dass die Auflagefläche (13) der Bodenfläche (15) gegenüber liegt,
wobei der Frachtträger (7) derart ausgestaltet ist, so über die sich in einer Bodenebene erstreckende Bodenfläche (15) bewegt zu werden, dass die Auflageseite (13) dabei zu der Bodenfläche (15) weist,
wobei das Bodenelement (9) eine Grundfläche (17) aufweist, die auf der Seite des Bodenelements (9) angeordnet ist, die von der Auflageseite (13) weg weist,
wobei die Auflageseite (13) mit einer Vielzahl von Rollelementen (21) versehen ist,
wobei jedes der Rollelemente (21) an einem Halter (31) um eine Drehachse (25) drehbar gehaltert ist, wobei jeder der Halter (31) zwischen einer ausgefahrenen Stellung und einer eingefahrenen Stellung verfahrbar ist, wobei der Abstand der Rollelemente (25) von der Grundfläche (17) in der ausgefahrenen Stellung größer ist als in der eingefahrenen Stellung,
wobei die Drehachsen (25) der Rollelemente (21), wenn die Halter (31) in der ausgefahrenen Stellung sind, in einer gemeinsamen Drehachsenebene (33) angeordnet sind,
wobei die Rollelemente (21) derart an dem Bodenelement (9) gehaltert sind, dass die Drehachse (25) jedes der Rollelemente (21) um eine Hochachse (29) drehbar ist, wobei die Hochachse (29) parallel beabstandet zu einer Achse verläuft, die sich durch die Drehachse (25) des Rollelements (21) und senkrecht zu der Drehachsenebene (33) erstreckt,
wobei die Vielzahl von Rollelementen (21) mehrere Gruppen von Rollelementen (21) umfasst, wobei die Halter (31), in denen die Rollelemente (21) einer ersten der Gruppen gehaltert sind, entlang einer geradlinig verlaufenden ersten Linie an dem Bodenelement (9) zwischen der eingefahrenen und der ausgefahrenen Stellung verschiebbar gehaltert sind, wobei die erste Linie parallel zu der Drehachsenebene (33) verläuft,
wobei in dem Bodenelement (9) eine sich entlang der ersten Linie erstreckende Nockenstange (73) vorgesehen ist, die drehfest damit verbundene Nockenelemente (71) aufweist,
wobei die Nockenstange (73) um eine sich parallel zur Drehachsenebene (33) und zur ersten Linie erstreckende Achse drehbar ist,
wobei jedem der Halter (31), in denen die Rollelemente (21) aus der ersten Gruppe gehaltert sind, ein Nockenelement (71) zugeordnet ist,
wobei jeder der Halter (31), in denen die Rollelemente (21) aus der ersten Gruppe gehaltert sind, eine Anlagefläche aufweist, die zumindest einen Bodenabschnitt (75) umfasst,
wobei das Nockenelement (71) an dem Bodenabschnitt (75) der Anlagefläche des dem Nockenelement (71) zugeordneten Halters (31) anliegt, **dadurch gekennzeichnet, dass**
der Bodenabschnitt (75) gesehen in einer Richtung senkrecht zu der Drehachsenebene (33) zwischen der Nockenstange (73) und der Drehachsenebene (33) angeordnet ist,
wobei jeder der Halter (31), in denen die Rollelemente (21) aus der ersten Gruppe gehaltert sind, eine kreisförmige Bohrung (69) aufweist, deren Innenfläche die Anlagefläche bildet und durch die sich die Nockenstange (73) erstreckt, und
wobei die Nockenelemente (71) einen kreisförmigen Querschnitt haben und über deren gesamten Umfang an der Anlagefläche anliegen.

10. Frachtträger zur Aufnahme in den Frachtbereich (3) eines Flugzeugs (1), mit einem Bodenelement (9), das eine Auflageseite (13) aufweist, die derart an dem Frachtträger (7) angeordnet ist, dass der Frachtträger (7) so auf einer Bodenfläche (15) eines Frachtbereichs (3) eines Flugzeugs (1) aufliegen kann, dass die Auflagefläche (13) der Bodenfläche (15) gegenüber liegt,
wobei der Frachtträger (7) derart ausgestaltet ist, so über die sich in einer Bodenebene erstreckende Bodenfläche (15) bewegt zu werden, dass die Auflageseite (13) dabei zu der Bodenfläche (15) weist,
wobei das Bodenelement (9) eine Grundfläche (17) aufweist, die auf der Seite des Bodenelements (9) angeordnet ist, die von der Auflageseite (13) weg weist,
wobei die Auflageseite (13) mit einer Vielzahl von Rollelementen (21) versehen ist,
wobei jedes der Rollelemente (21) an einem Halter (31) um eine Drehachse (25) drehbar gehaltert ist, wobei jeder der Halter (31) zwischen einer ausgefahrenen Stellung und einer eingefahrenen Stellung verfahrbar ist, wobei der Abstand der Rollelemente (25) von der Grundfläche (17) in der ausgefahrenen Stellung größer ist als in der eingefahrenen Stellung,
wobei die Drehachsen (25) der Rollelemente (21), wenn die Halter (31) in der ausgefahrenen Stellung sind, in einer gemeinsamen Drehachsenebene (33) angeordnet sind,
wobei die Rollelemente (21) derart an dem Bodenelement (9) gehaltert sind, dass die Drehachse (25) jedes der Rollelemente (21) um eine Hochachse (29) drehbar ist, wobei die Hochachse (29) parallel beabstandet zu einer Achse verläuft, die sich durch die Drehachse (25) des Rollelements (21) und senkrecht zu der Drehachsenebene (33) erstreckt,
wobei die Vielzahl von Rollelementen (21) mehrere Gruppen von Rollelementen (21) umfasst, wobei die Halter (31), in denen die Rollelemente (21) einer ersten der Gruppen gehaltert sind, entlang einer geradlinig verlaufenden ersten Linie an dem Bodenelement (9) zwischen der eingefahrenen und der ausgefahrenen Stellung verschiebbar gehaltert sind, wobei die erste Linie parallel zu der Drehachsenebene (33) verläuft,
wobei an dem Bodenelement (9) eine erste Hebelstange (81) schwenkbar gehaltert ist, die sich parallel zu der ersten Linie (77) erstreckt, wobei an der ersten Hebelstange (81) eine Vielzahl von Hebelelementen (83) unverdrehbar befestigt sind,
wobei jedem der Halter (31), in denen die Rollelemente (21) aus der ersten Gruppe gehaltert sind, ein Hebelelement (83) zugeordnet ist,
wobei ein Hebelarm (93) mit der ersten Hebelstange (81) gekoppelt ist,
**dadurch gekennzeichnet, dass**
die Halter (31), in denen die Rollelemente (21) aus der ersten Gruppe gehaltert sind, Führungsschienen (85) aufweisen, die ausgestaltet sind, ein freies Ende (87) des dem Halter (31) zugeordneten Hebelelements (83) derart aufzunehmen, dass es in einer Richtung quer, vorzugsweise senkrecht, zu der Hochachse (29), um die der dem Hebelelement (83) zugeordnete Halter (31) drehbar ist, verschiebbar und parallel zu dieser Hochachse (29) unverschiebbar ist,
wobei sich die Führungsschienen (85) senkrecht zu einer Erstreckungsrichtung der ersten Hebelstange (81) erstrecken.

11. Frachtträger nach Anspruch 10, wobei die Halter (31), in denen die Rollelemente (21) einer zweiten der Gruppen gehaltert sind, entlang einer geradlinig verlaufenden zweiten Linie (79) an dem Bodenelement (9) zwischen der eingefahrenen und der ausgefahrenen Stellung verschiebbar gehaltert sind, wobei die zweite Linie (79) parallel zu der ersten Linie (77) verläuft,
wobei an dem Bodenelement (9) eine zweite Hebelstange (89) schwenkbar gehaltert ist, die sich parallel zu der zweiten Linie (79) erstreckt, wobei an der zweiten Hebelstange (89) eine Vielzahl von zweiten Hebelelementen (91) unverdrehbar befestigt ist,
wobei jedem der Halter (31), in denen die Rollelemente (21) aus der zweiten Gruppe gehaltert sind, ein zweites Hebelelement (91) zugeordnet ist,
wobei die Halter (31), in denen die Rollelemente (21) aus der zweiten Gruppe gehaltert sind, zweite Führungsschienen aufweisen, die ausgestaltet sind, ein erstes Ende des dem Halter zugeordneten zweiten Hebelelements (91) derart aufzunehmen, dass es in einer Richtung quer, vorzugsweise senkrecht, zu der Hochachse (29), um die der dem zweiten Hebelelement (91) zugeordnete Halter drehbar ist, verschiebbar und parallel zu dieser Hochachse (29) unverschiebbar ist,
wobei sich die zweiten Führungsschienen senkrecht zu einer Erstreckungsrichtung der zweiten Hebelstange (89) erstrecken und
wobei die zweite Hebelstange (89) mit der ersten Hebelstange (81) derart gekoppelt ist, dass eine Schwenkbewegung des Hebelarms (93) zu einer Schwenkbewegung der zweiten Hebelstange (89) führt.

12. Frachtträger nach einem der Ansprüche 1 bis 11, wobei das Bodenelement (9) eine obere und eine untere Deckplatte (37, 39) aufweist,
wobei ein erstes und ein zweites Profilelement (41) vorgesehen sind, die sich parallel zueinander und zu der ersten Linie zwischen der oberen und der unteren Deckplatte (37, 39) erstrecken,
wobei die Halter (31), in denen die Rollelemente (21) aus der ersten Gruppe gehaltert sind, an dem ersten und dem zweiten Profilelement (41) anliegen, sodass sie in einer Richtung senkrecht zu der Drehachsenebene (33) von diesen geführt sind, und wobei Führungswinkel (43) mit Führungsflächen (45) an der oberen und/oder der unteren Deckplatte (37, 39) vorgesehen sind, die in Querrichtung zu der ersten Linie verlaufen und an denen die Halter (31) anliegen, in denen die Rollelemente (21) aus der ersten Gruppe gehaltert sind.

## Claims

1. Cargo carrier for being received into the cargo region (3) of an aircraft (1), having a bottom element (9) with a bearing side (13) which is arranged on the cargo carrier (7) in such a way that the cargo carrier (7) can bear on a bottom surface (15) of a cargo region (3) of an aircraft (1) so that the bearing surface (13) is situated opposite the bottom surface (15),
wherein the cargo carrier (7) is configured in such a way as to be moved over the bottom surface (15), which extends in a bottom plane, so that the bearing side (13) faces towards the bottom surface (15),
wherein the bottom element (9) has a base surface (17) which is arranged on that side of the bottom element (9) which faces away from the bearing side (13),
wherein the bearing side (13) is provided with a multiplicity of rolling elements (21),
wherein each of the rolling elements (21) is held on a holder (31) so as to be rotatable about an axis of rotation (25), wherein each of the holders (31) is displaceable between an extended position and a retracted position, wherein the distance of the rolling elements (25) from the base surface (17) in the extended position is greater than in the retracted position,
wherein, when the holders (31) are in the extended position, the axes of rotation (25) of the rolling elements (21) are arranged in a common axis-of-rotation plane (33),
wherein the rolling elements (21) are held on the bottom element (9) in such a way that the axis of rotation (25) of each of the rolling elements (21) is rotatable about a vertical axis (29), wherein the vertical axis (29) extends so as to be spaced apart in a parallel manner from an axis extending through the axis of rotation (25) of the rolling element (21) and extending perpendicularly to the axis-of-rotation plane (33),
wherein the multiplicity of rolling elements (21) comprises multiple groups of rolling elements (21), wherein the holders (31) holding the rolling elements (21) of a first one of the groups are held on the bottom element (9) along a rectilinearly extending first line so as to be displaceable between the retracted position and the extended position, wherein the first line extends parallel to the axis-of-rotation plane (33),
**characterized in that** each of the holders (31) holding the rolling elements (21) of the first groups has an engagement surface (49) which extends in a manner inclined at an angle of less than 90° to the vertical axis (29),
wherein provision is made of an actuating rod (51) extending along the first line and having counterpart surfaces (53) which are situated opposite the inclined engagement surfaces (49) and which bear areally against the engagement surfaces (49), and
the actuating rod (51) is held in the bottom element (9) so as to be displaceable along the first line, such that the actuating rod (51) is displaceable between a pushed-in position and a pulled-out position, wherein a displacement of the actuating rod (51) from the pushed-in position into the pulled-out position causes the holders (31) holding the rolling elements (21) of the first group to be displaced from the retracted position into the extended position.

2. Cargo carrier according to Claim 1, wherein each of the holders (31) is displaceable along the vertical axis (29) relative to the bottom element (9) between the retracted position and the extended position.

3. Cargo carrier according to Claim 1 or 2, wherein the bearing side (13) has bearing elements (35) which are arranged in a bearing plane, wherein the rolling elements (21) protrude beyond the bearing plane in the extended position of the holders (31) and are set back therebehind in the retracted position.

4. Cargo carrier according to Claim 3, wherein, on the bottom element (9), provision is made of locking pins (61) which extend perpendicularly to the bearing plane and which are held on the bottom element (9) so as to be displaceable perpendicularly to the bearing plane such that the locking pins (61) are displaceable between a release position and a locking position, and
wherein, in the locking position thereof, a free end of the locking pins (61) protrudes beyond the bearing plane and, in the release position thereof, the free end of the locking pins (61) is arranged in the bearing plane or on that side of the bearing plane which faces away from the axis-of-rotation plane (33).

5. Cargo carrier according to Claim 4, wherein the position of the locking pins (61) on the bottom element (9) is settable parallel to the bearing plane.

6. Cargo carrier according to one of Claims 1 to 5, wherein provision is made of an actuating arm (55) which is held in a pivotable manner on the bottom element (9), wherein the actuating rod (51) is articulated on the actuating arm (55) and pivoting of the actuating arm (55) in relation to the bottom element (9) causes the actuating rod (51) to be displaced along the first line.

7. Cargo carrier according to one of Claims 1 to 6, wherein a first end (59) of the actuating rod (51), in the pushed-in position, protrudes beyond an edge of the bottom element by a first extent, and wherein the first end (59) of the actuating rod (51) is pulled back into the interior of the bottom element (9) or the first end (59) protrudes by a second extent, smaller than the first extent, when the actuating rod (51) is in the pulled-out position.

8. Cargo carrier according to Claim 7, wherein, in a surface situated opposite the first end of the actuating rod (51), the bottom element (9) has a receiving cutout which is adapted to receive the first end (59) of an actuating rod (51).

9. Cargo carrier for being received into the cargo region (3) of an aircraft (1), having a bottom element (9) with a bearing side (13) which is arranged on the cargo carrier (7) in such a way that the cargo carrier (7) can bear on a bottom surface (15) of a cargo region (3) of an aircraft (1) so that the bearing surface (13) is situated opposite the bottom surface (15),
wherein the cargo carrier (7) is configured in such a way as to be moved over the bottom surface (15), which extends in a bottom plane, so that the bearing side (13) faces towards the bottom surface (15),
wherein the bottom element (9) has a base surface (17) which is arranged on that side of the bottom element (9) which faces away from the bearing side (13),
wherein the bearing side (13) is provided with a multiplicity of rolling elements (21),
wherein each of the rolling elements (21) is held on a holder (31) so as to be rotatable about an axis of rotation (25), wherein each of the holders (31) is displaceable between an extended position and a retracted position, wherein the distance of the rolling elements (25) from the base surface (17) in the extended position is greater than in the retracted position,
wherein, when the holders (31) are in the extended position, the axes of rotation (25) of the rolling elements (21) are arranged in a common axis-of-rotation plane (33),
wherein the rolling elements (21) are held on the bottom element (9) in such a way that the axis of rotation (25) of each of the rolling elements (21) is rotatable about a vertical axis (29), wherein the vertical axis (29) extends so as to be spaced apart in a parallel manner from an axis extending through the axis of rotation (25) of the rolling element (21) and extending perpendicularly to the axis-of-rotation plane (33),
wherein the multiplicity of rolling elements (21) comprises multiple groups of rolling elements (21), wherein the holders (31) holding the rolling elements (21) of a first one of the groups are held on the bottom element (9) along a rectilinearly extending first line so as to be displaceable between the retracted position and the extended position, wherein the first line extends parallel to the axis-of-rotation plane (33),
wherein provision is made, in the bottom element (9), of a cam rod (73) which extends along the first line and which has cam elements (71) connected thereto in a rotationally conjoint manner,
wherein the cam rod (73) is rotatable about an axis which extends parallel to the axis-of-rotation plane (33) and to the first line,
wherein each of the holders (31) holding the rolling elements (21) from the first group is assigned a cam element (71),
wherein each of the holders (31) holding the rolling elements (21) from the first group has an abutment surface which comprises at least a bottom portion (75), wherein the cam element (71) bears against the bottom portion (75) of the abutment surface of the holder (31) assigned to the cam element (71), **characterized in that** the bottom portion (75), when viewed in a direction perpendicular to the axis-of-rotation plane (33), is arranged between the cam rod (73) and the axis-of-rotation plane (33),
wherein each of the holders (31) holding the rolling elements (21) from the first group has a circular bore (69) whose inner surface forms the abutment surface and through which the cam rod (73) extends, and
wherein the cam elements (71) have a circular cross section and bear over the entire circumference thereof against the abutment surface.

10. Cargo carrier for being received into the cargo region (3) of an aircraft (1), having a bottom element (9) with a bearing side (13) which is arranged on the cargo carrier (7) in such a way that the cargo carrier (7) can bear on a bottom surface (15) of a cargo region (3) of an aircraft (1) so that the bearing surface (13) is situated opposite the bottom surface (15),
wherein the cargo carrier (7) is configured in such a way as to be moved over the bottom surface (15), which extends in a bottom plane, so that the bearing side (13) faces towards the bottom surface (15),
wherein the bottom element (9) has a base surface (17) which is arranged on that side of the bottom element (9) which faces away from the bearing side (13),
wherein the bearing side (13) is provided with a multiplicity of rolling elements (21),
wherein each of the rolling elements (21) is held on a holder (31) so as to be rotatable about an axis of rotation (25), wherein each of the holders (31) is displaceable between an extended position and a retracted position, wherein the distance of the rolling elements (25) from the base surface (17) in the extended position is greater than in the retracted position,
wherein, when the holders (31) are in the extended position, the axes of rotation (25) of the rolling elements (21) are arranged in a common axis-of-rotation plane (33),
wherein the rolling elements (21) are held on the bottom element (9) in such a way that the axis of rotation (25) of each of the rolling elements (21) is rotatable about a vertical axis (29), wherein the vertical axis (29) extends so as to be spaced apart in a parallel manner from an axis extending through the axis of rotation (25) of the rolling element (21) and extending perpendicularly to the axis-of-rotation plane (33),
wherein the multiplicity of rolling elements (21) comprises multiple groups of rolling elements (21), wherein the holders (31) holding the rolling elements (21) of a first one of the groups are held on the bottom element (9) along a rectilinearly extending first line so as to be displaceable between the retracted position and the extended position, wherein the first line extends parallel to the axis-of-rotation plane (33),
wherein a first lever rod (81) extending parallel to the first line (77) is held in a pivotable manner on the bottom element (9), wherein a multiplicity of lever elements (83) are fastened in a non-rotatable manner to the first lever rod (81),
wherein each of the holders (31) holding the rolling elements (21) from the first group is assigned a lever element (83), wherein a lever arm (93) is coupled to the first lever rod (81),
**characterized in that** the holders (31) holding the rolling elements (21) from the first group have guide rails (85) which are configured to receive a free end (87) of the lever element (83) assigned to the holder (31) in such a way as for it to be displaceable in a direction transverse, preferably perpendicular, to the vertical axis (29) about which the holder (31) assigned to the lever element (83) is rotatable, and for it to be non-displaceable parallel to said vertical axis (29), wherein the guide rails (85) extend perpendicularly to a direction of extent of the first lever rod (81).

11. Cargo carrier according to Claim 10, wherein the holders (31) holding the rolling elements (21) of a second one of the groups are held on the bottom element (9) along a rectilinearly extending second line (79) so as to be displaceable between the retracted position and the extended position, wherein the second line (79) extends parallel to the first line (77),
wherein a second lever rod (89) extending parallel to the second line (79) is held in a pivotable manner on the bottom element (9), wherein a multiplicity of second lever elements (91) are fastened in a non-rotatable manner to the second lever rod (89),
wherein each of the holders (31) holding the rolling elements (21) from the second group is assigned a second lever element (91),
wherein the holders (31) holding the rolling elements (21) from the second group have second guide rails which are configured to receive a first end of the second lever element (91) assigned to the holder in such a way as for it to be displaceable in a direction transverse, preferably perpendicular, to the vertical axis (29) about which the holder assigned to the second lever element (91) is rotatable, and for it to be non-displaceable parallel to said vertical axis (29),
wherein the second guide rails extend perpendicularly to a direction of extent of the second lever rod (89), and wherein the second lever rod (89) is coupled to the first lever rod (81) in such a way that a pivoting movement of the lever arm (93) results in a pivoting movement of the second lever rod (89).

12. Cargo carrier according to one of Claims 1 to 11, wherein the bottom element (9) has an upper and a lower cover plate (37, 39),
wherein provision is made of a first and a second profile element (41), which extend parallel to one another and to the first line between the upper and the lower cover plate (37, 39),
wherein the holders (31) holding the rolling elements (21) from the first group bear against the first and the second profile element (41) so as to be guided thereby in a direction perpendicular to the axis-of-rotation plane (33), and wherein provision is made, on the upper and/or the lower cover plate (37, 39), of guide brackets (43) with guide surfaces (45), which extend in a transverse direction in relation to the first line and against which the holders (31) holding the rolling elements (21) from the first group bear.

## Revendications

1. Porteur de fret destiné à être reçu dans la zone de fret (3) d'un aéronef (1), comprenant un élément de fond (9) qui comprend un côté d'appui (13) agencé sur le porteur de fret (7) de telle sorte que le porteur de fret (7) soit apte à reposer sur une surface de plancher (15) d'une zone de fret (3) d'un aéronef (1) de manière que le côté d'appui (13) soit en regard de la surface de plancher (15),
le porteur de fret (7) étant conçu pour être déplacé sur la surface de plancher (15) s'étendant dans un plan de plancher de telle sorte que le côté d'appui (13) soit tourné vers la surface de plancher (15),
l'élément de fond (9) comprenant une surface de base (17) qui est agencée sur le côté de l'élément de fond (9) qui est opposé au côté d'appui (13),
le côté d'appui (13) étant pourvu d'une pluralité d'éléments roulants (21),
chacun des éléments roulants (21) étant monté de manière rotative sur un support (31) autour d'un axe de rotation (25), chacun des supports (31) étant déplaçable entre une position sortie et une position rentrée, la distance entre les éléments roulants (25) et la surface de base (17) étant plus grande dans la position sortie que dans la position rentrée,
les axes de rotation (25) des éléments roulants (21) étant agencés dans un plan d'axe de rotation commun (33) lorsque les supports (31) sont dans la position sortie, les éléments roulants (21) étant montés sur l'élément de fond (9) de telle sorte que l'axe de rotation (25) de chacun des éléments roulants (21) soit apte à tourner autour d'un axe vertical (29), l'axe vertical (29) étant parallèle à un axe qui s'étend à travers l'axe de rotation (25) de l'élément roulant (21) et étant espacé de celui-ci, et étant perpendiculaire au plan des axes de rotation (33),
la pluralité d'éléments roulants (21) comprenant plusieurs groupes d'éléments roulants (21), les supports (31) dans lesquels sont montés les éléments roulants (21) d'un premier des groupes étant montés de manière déplaçable le long d'une première ligne rectiligne sur l'élément de base (9) entre la position rentrée et la position sortie, la première ligne s'étendant parallèlement au plan de l'axe de rotation (33), **caractérisé en ce que** chacun des supports (31) dans lesquels sont montés les éléments roulants (21) des premiers groupes comprend une surface d'engagement (49) inclinée d'un angle inférieur à 90° par rapport à l'axe vertical (29),
une tige d'actionnement (51) s'étendant le long de la première ligne étant prévue, qui comprend des surfaces d'appui (53) opposées aux surfaces d'engagement (49) inclinées et s'appliquant à plat contre les surfaces d'engagement (49), et
la tige d'actionnement (51) est montée dans l'élément de fond (9) de manière déplaçable le long de la première ligne, de sorte que la tige d'actionnement (51) soit déplaçable entre une position rentrée et une position sortie, le déplacement de la tige d'actionnement (51) de la position rentrée à la position sortie provoquant le déplacement des supports (31) dans lequel les éléments roulants (21) du premier groupe sont montés, de la position rentrée à la position sortie.

2. Porteur de fret selon la revendication 1, dans lequel chacun des supports (31) est déplaçable le long de l'axe vertical (29) par rapport à l'élément de fond (9) entre la position rentrée et la position sortie.

3. Porteur de fret selon la revendication 1 ou la revendication 2, dans lequel le côté d'appui (13) comprend des éléments d'appui (35) qui sont agencés dans un plan d'appui, les éléments roulants (21) dépassant du plan d'appui dans la position sortie des supports (31) et étant en retrait derrière celui-ci dans la position rentrée.

4. Porteur de fret selon la revendication 3, dans lequel des broches de verrouillage (61) s'étendant perpendiculairement au plan d'appui sont prévues sur l'élément de fond (9) et sont montées de manière déplaçable perpendiculairement au plan d'appui sur l'élément de fond (9), de sorte que les broches de verrouillage (61) sont déplaçables entre une position de déverrouillage et une position de verrouillage, et
dans leur position de verrouillage, une extrémité libre des broches de verrouillage (61) dépasse du plan d'appui et, dans leur position de déverrouillage, l'extrémité libre des broches de verrouillage (61) est agencée dans le plan d'appui ou sur le côté du plan d'appui opposé au plan de l'axe de rotation (33).

5. Porteur de fret selon la revendication 4, dans lequel la position des broches de verrouillage (61) sur l'élément de fond (9) est réglable parallèlement au plan d'appui.

6. Porteur de fret selon l'une des revendications 1 à 5, dans lequel il est prévu un bras d'actionnement (55) qui est monté de manière pivotante sur l'élément de fond (9), la tige d'actionnement (51) étant articulée sur le bras d'actionnement (55) et un pivotement du bras d'actionnement (55) par rapport à l'élément de fond (9) provoquant un déplacement de la tige d'actionnement (51) le long de la première ligne.

7. Porteur de fret selon l'une des revendications 1 à 6, dans lequel une première extrémité (59) de la tige d'actionnement (51) dépasse, dans la position rentrée, d'un bord de l'élément de fond sur une première étendue, et dans lequel la première extrémité (59) de la tige d'actionnement (51) est rétractée à l'intérieur de l'élément de fond (9) ou la première extrémité (59) fait saillie sur une deuxième étendue, qui est inférieure à la première étendue, lorsque la tige d'actionnement (51) est dans la position sortie.

8. Porteur de fret selon la revendication 7, dans lequel l'élément de fond (9) comprend, dans une surface opposée à la première extrémité de la tige d'actionnement (51), un évidement de réception qui est adapté pour recevoir la première extrémité (59) d'une tige d'actionnement (51).

9. Porteur de fret destiné à être reçu dans la zone de fret (3) d'un aéronef (1), comprenant un élément de fond (9) qui comprend un côté d'appui (13) agencé sur le porteur de fret (7) de telle sorte que le porteur de fret (7) soit apte à reposer sur une surface de plancher (15) d'une zone de fret (3) d'un aéronef (1) de manière que le côté d'appui (13) soit en regard de la surface de plancher (15),
le porteur de fret (7) étant conçu pour être déplacé sur la surface de plancher (15) s'étendant dans un plan de plancher de telle sorte que le côté d'appui (13) soit tourné vers la surface de plancher (15),
l'élément de fond (9) comprenant une surface de base (17) qui est agencée sur le côté de l'élément de fond (9) qui est opposé au côté d'appui (13),
le côté d'appui (13) étant pourvu d'une pluralité d'éléments roulants (21),
chacun des éléments roulants (21) étant monté de manière rotative sur un support (31) autour d'un axe de rotation (25), chacun des supports (31) étant déplaçable entre une position sortie et une position rentrée, la distance entre les éléments roulants (25) et la surface de base (17) étant plus grande dans la position sortie que dans la position rentrée,
les axes de rotation (25) des éléments roulants (21) étant agencés dans un plan d'axe de rotation commun (33) lorsque les supports (31) sont dans la position sortie, les éléments roulants (21) étant montés sur l'élément de fond (9) de telle sorte que l'axe de rotation (25) de chacun des éléments roulants (21) soit apte à tourner autour d'un axe vertical (29), l'axe vertical (29) étant parallèle à un axe qui s'étend à travers l'axe de rotation (25) de l'élément roulant (21) et étant espacé de celui-ci, et étant perpendiculaire au plan des axes de rotation (33),
la pluralité d'éléments roulants (21) comprenant plusieurs groupes d'éléments roulants (21), les supports (31) dans lesquels sont montés les éléments roulants (21) d'un premier des groupes étant montés de manière déplaçable le long d'une première ligne rectiligne sur l'élément de base (9) entre la position rentrée et la position sortie, la première ligne s'étendant parallèlement au plan de l'axe de rotation (33),
une tige de came (73) s'étendant le long de la première ligne étant prévue dans l'élément de fond (9) et comprenant des éléments de came (71) reliés à celle-ci de manière solidaire en rotation,
la tige de came (73) étant apte à tourner autour d'un axe s'étendant parallèlement au plan de l'axe de rotation (33) et à la première ligne,
chacun des supports (31) dans lesquels sont montés les éléments roulants (21) du premier groupe étant associé à un élément de came (71),
chacun des supports (31) dans lesquels sont montés les éléments roulants (21) du premier groupe comprenant une surface d'appui qui comprend au moins une partie de fond (75),
l'élément de came (71) s'appuyant sur la partie de fond (75) du côté d'appui du support (31) associé à l'élément de came (71), **caractérisé en ce que** la partie de fond (75), vue dans une direction perpendiculaire au plan de l'axe de rotation (33), est agencée entre la tige de came (73) et le plan de l'axe de rotation (33),
chacun des supports (31) dans lesquels sont montés les éléments roulants (21) du premier groupe comprenant un alésage circulaire (69) dont la surface intérieure forme le côté d'appui et à travers lequel s'étend la tige de came (73), et
les éléments de came (71) ayant une section transversale circulaire et s'appuyant sur toute leur périphérie contre le côté d'appui.

10. Porteur de fret destiné à être reçu dans la zone de fret (3) d'un aéronef (1), comprenant un élément de fond (9) qui comprend un côté d'appui (13) agencé sur le porteur de fret (7) de telle sorte que le porteur de fret (7) soit apte à reposer sur une surface de plancher (15) d'une zone de fret (3) d'un aéronef (1) de manière que le côté d'appui (13) soit en regard de la surface de plancher (15),
le porteur de fret (7) étant conçu pour être déplacé sur la surface de plancher (15) s'étendant dans un plan de plancher de telle sorte que le côté d'appui (13) soit tourné vers la surface de plancher (15),
l'élément de fond (9) comprenant une surface de base (17) qui est agencée sur le côté de l'élément de fond (9) qui est opposé au côté d'appui (13),
le côté d'appui (13) étant pourvu d'une pluralité d'éléments roulants (21),
chacun des éléments roulants (21) étant monté de manière rotative sur un support (31) autour d'un axe de rotation (25), chacun des supports (31) étant déplaçable entre une position sortie et une position rentrée, la distance entre les éléments roulants (25) et la surface de base (17) étant plus grande dans la position sortie que dans la position rentrée,
les axes de rotation (25) des éléments roulants (21) étant agencés dans un plan d'axe de rotation commun (33) lorsque les supports (31) sont dans la position sortie, les éléments roulants (21) étant montés sur l'élément de fond (9) de telle sorte que l'axe de rotation (25) de chacun des éléments roulants (21) soit apte à tourner autour d'un axe vertical (29), l'axe vertical (29) étant parallèle à un axe qui s'étend à travers l'axe de rotation (25) de l'élément roulant (21) et étant espacé de celui-ci, et étant perpendiculaire au plan des axes de rotation (33),
la pluralité d'éléments roulants (21) comprenant plusieurs groupes d'éléments roulants (21), les supports (31) dans lesquels sont montés les éléments roulants (21) d'un premier des groupes étant montés de manière déplaçable le long d'une première ligne rectiligne sur l'élément de base (9) entre la position rentrée et la position sortie, la première ligne s'étendant parallèlement au plan de l'axe de rotation (33),
une première tige de levier (81) qui s'étend parallèlement à la première ligne (77) étant montée de manière pivotante sur l'élément de fond (9), une pluralité d'éléments de levier (83) étant fixés de manière non-rotative sur la première tige de levier (81), chacun des supports (31) dans lesquels sont montés les éléments roulants (21) du premier groupe étant associé à un élément (83) formant levier, un bras de levier (93) étant relié à la première tige de levier (81),
**caractérisé en ce que** les supports (31) dans lesquels sont montés les éléments roulants (21) du premier groupe comprennent des rails de guidage (85) qui sont conçus pour recevoir une extrémité libre (87) de l'élément (83) formant levier associé au support (31) de telle sorte qu'elle soit apte à être déplacée dans une direction transversale, de préférence perpendiculaire, à l'axe vertical (29) autour duquel le support (31) associé à l'élément (83) formant levier est apte à tourner, et de manière immobile parallèlement à cet axe vertical (29), les rails de guidage (85) s'étendant perpendiculairement à une direction d'extension de la première tige de levier (81).

11. Porteur de fret selon la revendication 10, dans lequel les supports (31) dans lesquels sont montés les éléments roulants (21) d'un deuxième des groupes sont montés de manière déplaçable le long d'une deuxième ligne rectiligne (79) sur l'élément de fond (9) entre la position rentrée et la position sortie, la deuxième ligne (79) s'étendant parallèlement à la première ligne (77), une deuxième tige de levier (89), s'étendant parallèlement à la deuxième ligne (79), étant montée de manière pivotante sur l'élément de fond (9), une pluralité de deuxièmes éléments de levier (91) étant fixés de manière non-rotative à la deuxième tige de levier (89),
chacun des supports (31) dans lesquels sont montés les éléments roulants (21) du deuxième groupe étant associé à un deuxième élément (91) formant levier,
les supports (31) dans lesquels sont montés les éléments roulants (21) du deuxième groupe comprenant des deuxièmes rails de guidage qui sont conçus pour recevoir une première extrémité du deuxième élément (91) formant levier associé au support de telle sorte qu'elle soit déplaçable dans une direction transversale, de préférence perpendiculaire, à l'axe vertical (29) autour duquel le support associé au deuxième élément (91) formant levier est apte à tourner, et qu'elle soit immobile parallèlement à cet axe vertical (29),
les deuxièmes rails de guidage s'étendant perpendiculairement à une direction d'extension de la deuxième tige de levier (89), et
la deuxième tige de levier (89) étant reliée à la première tige de levier (81) de telle sorte qu'un mouvement de pivotement du bras de levier (93) entraîne un mouvement de pivotement de la deuxième tige de levier (89).

12. Porteur de fret selon l'une des revendications 1 à 11, dans lequel l'élément de fond (9) comprend une plaque de recouvrement supérieure et une plaque de recouvrement inférieure (37, 39),
un premier et un deuxième éléments profilés (41) étant prévus, qui s'étendent parallèlement l'un à l'autre et à la première ligne entre les plaques de recouvrement supérieure et inférieure (37, 39),
les supports (31) dans lesquels sont montés les éléments roulants (21) du premier groupe s'appuyant sur les premier et deuxième éléments profilés (41) de manière à être guidés dans une direction perpendiculaire au plan de l'axe de rotation (33) de ceux-ci, et des cornières de guidage (43) avec des surfaces de guidage (45) étant prévues sur la plaque de recouvrement supérieure et/ou inférieure (37, 39), qui s'étendent transversalement à la première ligne et contre lesquelles s'appuient les supports (31) dans lesquels sont montés les éléments roulants (21) du premier groupe.
